# EUROPEAN PATENT APPLICATION

(11) **EP 4 617 987 A1**
(43) Date of publication of application: **17.09.2025**
(21) Application number: 23899860.3
(22) Date of filing: 29.11.2023
(51) Int. Cl.: G06Q 30/0251

(54) **ADVERTISEMENT LAUNCHING METHOD, DEVICE AND SYSTEM**

(30) Priority: 08.12.2022 CN 202211574135
(71) Applicant: Huawei Technologies Co., Ltd., Shenzhen, Guangdong 518129 (CN)
(72) Inventor: MO, Lan, Shenzhen, Guangdong 518129 (CN); WANG, Xing, Shenzhen, Guangdong 518129 (CN)
(74) Representative: Goddar, Heinz J.
(86) International application number: PCT/CN2023/135240
(87) International publication number: WO 2024/120281

(57) **Abstract**

This application discloses an advertisement delivery method, a device, and a system, and relates to the field of Internet technologies, to implement more precise and efficient advertisement delivery. In this application, a task of generating context information of media content is completed by a cloud-side server in advance, so that an advertisement delivery delay can be reduced, and more precise context information can be obtained. The context information of the media content is used to perform related advertising matching. In addition, in this application, when responding to a content request of a terminal device for a first interface, an application server may send, to the terminal device, an advertising identifier of advertising content matching context information of media content in the first interface, so that the terminal device includes the advertising identifier to request the corresponding advertising content from the advertising server. According to this solution, more precise and efficient advertisement delivery can be implemented.

## Description

This application claims priority to Chinese Patent Application No. 202211574135.X, filed with the China National Intellectual Property Administration on December 8, 2022 and entitled "ADVERTISEMENT DELIVERY METHOD, DEVICE, AND SYSTEM", which is incorporated herein by reference in its entirety.

### TECHNICAL FIELD

This application relates to the field of Internet technologies, and in particular, to an advertisement delivery method, a device, and a system.

### BACKGROUND

An Internet advertising system usually includes an advertising server (which may also be described as an advertising platform) on a cloud side and a software development kit (software development kit, SDK) (referred to as an advertising SDK for short below), corresponding to the advertising server, on a terminal side. Advertisers upload to-be-delivered advertising content (for example, an advertising image, a video, a copy, and an audio) to advertising servers. In a process in which a terminal user uses an application (application, APP) on the terminal, if an advertising slot is set in an APP interface, the APP is triggered to invoke the advertising SDK to send an advertising request to the advertising server, to obtain advertising content and display the advertising content in the advertising slot in the APP interface.

However, how to obtain, from massive advertising content of the advertising server, advertising content of a title or a category that the terminal user may be interested in, to implement more precise advertisement delivery is a problem that needs to be resolved.

### SUMMARY

This application provides an advertisement delivery method, a device, and a system, to implement more precise and efficient advertisement delivery.

To achieve the foregoing objective, this application uses the following technical solutions.

According to a first aspect, an advertisement delivery method is provided, where the method is applied to a terminal device, and the method includes: The terminal device sends a first content request to an application server, where the first content request is used to request first media content and a first advertisement candidate set related to the first media content; the terminal device receives the first media content and the first advertisement candidate set from the application server; the terminal device displays a first application interface, where the first application interface includes the first media content; the terminal device sends a first advertising request to an advertising server, where the first advertising request carries the first advertisement candidate set; the terminal device receives first advertising content from the advertising server, where the first advertising content is associated with the first advertisement candidate set; and the terminal device displays a second application interface, where the second application interface includes the first media content and the first advertising content.

For example, the first application interface may be a main page of an application, or may be another page in the application. This is not limited in this application.

For example, the first advertising content received by the terminal device from the advertising server may include advertising content of one or more advertisements. When the second application interface may include a plurality of advertising slots, the terminal device may receive advertising content of the plurality of advertisements from the advertising server, and respectively display the advertising content of the plurality of advertisements in a plurality of advertising slots in the second application interface.

In the solution provided in the first aspect, when the terminal device requests the media content of the application interface, the application server may send the media content and the advertisement candidate set related to the media content to the terminal device together. Based on this, the terminal device may carry the advertisement candidate set when requesting the advertising content from the advertising server, so that the advertising server can match the advertising content corresponding to the advertisement candidate set. In this solution, because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the method further includes: The terminal device sends a second content request to the application server in response to a first operation, where the second content request is used to request second media content and a second advertisement candidate set related to the second media content; the terminal device receives the second media content and the second advertisement candidate set from the application server; the terminal device displays a third application interface, where the third application interface includes the second media content; the terminal device sends a second advertising request to the advertising server in response to a second operation, where the second advertising request carries an open anonymous device identifier (open anonymous device identifier, OAID) and the second advertisement candidate set; the terminal device receives second advertising content from the advertising server, where the second advertising content is associated with the OAID or the second advertisement candidate set; and the terminal device displays a fourth application interface, where the fourth application interface includes the second media content and the second advertising content. Based on this, the terminal device includes the OAID in the advertising request to indicate a user profile to the advertising server, so that the advertising server can preferentially recommend an advertisement to the terminal device based on the OAID, to improve advertisement delivery accuracy. The user profile may indicate but is not limited to an information browsing behavior of the user, for example, a behavior of searching for information by the user, a behavior of reading information by the user, and a behavior of tapping information by the user.

For example, the first operation may be an operation of tapping an application icon, an operation of switching an application interface on a second interface, or an operation of sliding to browse application content. The second operation may be an operation (for example, the operation of switching an application interface on the second interface) the same as the first operation, or the second operation may be an operation (for example, an operation of tapping a content thumbnail box in the application interface) different from the first operation. This is not limited in this application.

In a possible implementation, the first advertisement candidate set and the second advertisement candidate set are obtained by the application server from the advertising server. Based on this, the application server may obtain the advertisement candidate set related to the media content from the advertising server, and send the advertisement candidate set related to the media content to the terminal device when the terminal device requests the media content. Because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the first advertisement candidate set includes an advertising identifier of at least one piece of advertising content matching context information of the first media content, and the identifier of the at least one piece of advertising content matching the context information of the first media content includes an identifier of the first advertising content. Based on this, because the advertisement candidate set is an identifier of the advertising content that matches the context information of the media content and that is obtained by the terminal device from the application server, that is, the advertisement candidate set is an identifier of advertising content that has a highest association degree with the media content, when the terminal device includes the advertisement candidate set to request the advertising content from the advertising server, the advertising server may precisely push, based on the advertisement candidate set, the advertising content related to the media content to the terminal device.

In a possible implementation, that the terminal device sends a first content request to an application server includes: The terminal device sends the first content request to the application server in response to a third operation. Based on this, the terminal device may be triggered to obtain the media content from the application server based on the operation of the user. Certainly, when a preset condition is met, the terminal device may automatically trigger obtaining the media content from the application server. This is not limited in this application.

In a possible implementation, the third operation is an operation of starting an application, an operation of switching an application interface, or an operation of browsing application content. For example, the operation of starting an application is the operation of tapping an application icon, and the operation of browsing application content is the operation of sliding to browse application content.

In a possible implementation, that the terminal device sends a first advertising request to an advertising server includes: The terminal device sends the first advertising request to the advertising server in response to a fourth operation. Based on this, the terminal device may be triggered to obtain the advertising content from the advertising server based on the operation of the user. Certainly, when a preset condition is met, the terminal device may automatically trigger obtaining the advertising content from the advertising server. This is not limited in this application.

According to a second aspect, an advertisement delivery method is provided, where the method is applied to an application server, and the method includes: The application server receives a first content request from a terminal device, where the first content request is used to request first media content and a first advertisement candidate set related to the first media content; and the application server sends the first media content and the first advertisement candidate set to the terminal device.

In the solution provided in the second aspect, when the terminal device requests the media content of an application interface, the application server may send the media content and the advertisement candidate set related to the media content to the terminal device together. Based on this, the terminal device may carry the advertisement candidate set when requesting advertising content from the advertising server, so that the advertising server can match the advertising content corresponding to the advertisement candidate set. In this solution, because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the method further includes: The application server sends context information of the first media content to an advertising server; and the application server receives, from the advertising server, at least one piece of advertising content matching the context information of the first media content, where the at least one piece of advertising content includes first advertising content. Based on this, because the advertisement candidate set is an identifier of the advertising content that matches the context information of the media content and that is obtained by the terminal device from the application server, that is, the advertisement candidate set is an identifier of advertising content that has a highest association degree with the media content, when the terminal device includes the advertisement candidate set to request the advertising content from the advertising server, the advertising server may precisely push, based on the advertisement candidate set, the advertising content related to the media content to the terminal device.

In a possible implementation, the context information of the first media content includes one or more of the following information: a title, a category, or a content abstract. Based on this, the application server may obtain an advertising identifier that has a highest association degree with the first media content in one or more aspects such as a title, a category, or a content abstract, so that when the terminal device includes the advertisement candidate set to request the advertising content from the advertising server, the advertising server can precisely push, based on the advertisement candidate set, the advertising content related to the media content to the terminal device.

In a possible implementation, the method further includes: The application server obtains the first media content sent to a content analysis server; the content analysis server analyzes the first media content, and generates the context information of the first media content; and the application server receives the context information of the first media content from the content analysis server. Alternatively, the application server analyzes the first media content and generates the context information of the first media content. Based on this, the application server may analyze the media content to obtain the context information of the media content, or another device may analyze the media content to obtain the context information of the media content. The method may be adapted to a plurality of different network architectures for implementation.

In a possible implementation, the method further includes: The application server receives the first media content uploaded by a creator; or the application server obtains the first media content from a cooperation platform. Based on this, the application server may support sending, for media content from any source, the media content and an advertisement candidate set associated with the media content by using a same strategy in this application.

According to a third aspect, an advertisement delivery method is provided, where the method includes: A terminal device sends a first content request to an application server, where the first content request is used to request first media content and a first advertisement candidate set related to the first media content; the application server sends the first media content and the first advertisement candidate set to the terminal device; the terminal device displays a first application interface, where the first application interface includes the first media content; the terminal device sends a first advertising request to an advertising server, where the first advertising request carries the first advertisement candidate set; the advertising server sends first advertising content to the terminal device based on the first advertisement candidate set, where the first advertising content is associated with the first advertisement candidate set; and the terminal device displays a second application interface, where the second application interface includes the first media content and the first advertising content.

In the solution provided in the first aspect, when the terminal device requests the media content of the application interface, the application server may send the media content and the advertisement candidate set related to the media content to the terminal device together. Based on this, the terminal device may carry the advertisement candidate set when requesting the advertising content from the advertising server, so that the advertising server can match the advertising content corresponding to the advertisement candidate set. In this solution, because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the method further includes: The application server sends context information of the first media content to the advertising server; the advertising server selects at least one piece of advertising content matching the context information of the first media content, where the at least one piece of advertising content includes the first advertising content; and the advertising server sends the first advertisement candidate set to the application server, where the first advertisement candidate set includes an advertising identifier of the at least one piece of advertising content matching the context information of the first media content. Based on this, because the advertisement candidate set is an identifier of the advertising content that matches the context information of the media content and that is obtained by the terminal device from the application server, that is, the advertisement candidate set is an identifier of advertising content that has a highest association degree with the media content, when the terminal device includes the advertisement candidate set to request the advertising content from the advertising server, the advertising server may precisely push, based on the advertisement candidate set, the advertising content related to the media content to the terminal device.

In a possible implementation, the context information of the first media content includes one or more of the following information: a title, a category, or a content abstract; and that the advertising server selects at least one piece of advertising content matching the context information of the first media content includes: The advertising server selects, based on one or more of the title, the category, or the content abstract, the at least one piece of advertising content matching the context information of the first media content. Based on this, the application server may obtain an advertising identifier that has a highest association degree with the first media content in one or more aspects such as a title, a category, or a content abstract, so that when the terminal device includes the advertisement candidate set to request the advertising content from the advertising server, the advertising server can precisely push, based on the advertisement candidate set, the advertising content related to the media content to the terminal device.

In a possible implementation, the method further includes: The application server obtains the first media content sent to a content analysis server; the content analysis server analyzes the first media content, and generates the context information of the first media content; and the application server receives the context information of the first media content from the content analysis server. Alternatively, the application server analyzes the first media content and generates the context information of the first media content. Based on this, the application server may analyze the media content to obtain the context information of the media content, or another device may analyze the media content to obtain the context information of the media content. The method may be adapted to a plurality of different network architectures for implementation.

In a possible implementation, the method further includes: The application server receives the first media content uploaded by a creator; or the application server obtains the first media content from a cooperation platform. Based on this, the application server may support sending, for media content from any source, the media content and an advertisement candidate set associated with the media content by using a same strategy in this application.

In a possible implementation, the method further includes: The terminal device sends a second content request to the application server in response to a first operation, where the second content request is used to request second media content and a second advertisement candidate set related to the second media content; the application server sends the second media content and the second advertisement candidate set to the terminal device; the terminal device displays a third application interface, where the third application interface includes the second media content; the terminal device sends a second advertising request to the advertising server in response to a second operation, where the second advertising request carries an OAID and the second advertisement candidate set; the advertising server sends second advertising content to the terminal device, where the second advertising content is associated with the OAID or the second advertisement candidate set; and the terminal device displays a fourth application interface, where the fourth application interface includes the second media content and the second advertising content. Based on this, the terminal device includes the OAID in the advertising request to indicate a user profile to the advertising server, so that the advertising server can preferentially recommend an advertisement to the terminal device based on the OAID, to improve advertisement delivery accuracy. The user profile may indicate but is not limited to an information browsing behavior of the user, for example, a behavior of searching for information by the user, a behavior of reading information by the user, and a behavior of tapping information by the user.

In a possible implementation, that the advertising server sends second advertising content to the terminal device includes: The advertising server determines a user profile based on the OAID; and the advertising server selects the second advertising content based on the user profile, and sends the second advertising content to the terminal device. Based on this, the advertising server can preferentially recommend an advertisement to the terminal device based on the OAID, to improve advertisement delivery accuracy.

In a possible implementation, when the advertising server fails to select the corresponding advertising content based on the user profile, the method further includes: The advertising server selects the second advertising content based on the second advertisement candidate set. Based on this, normal advertisement delivery can be ensured, and advertisement delivery accuracy can be ensured.

In a possible implementation, that the terminal device sends a first content request to an application server includes: The terminal device sends the first content request to the application server in response to a third operation. Based on this, the terminal device may be triggered to obtain the media content from the application server based on the operation of the user. Certainly, when a preset condition is met, the terminal device may automatically trigger obtaining the media content from the application server. This is not limited in this application.

In a possible implementation, the third operation is an operation of starting an application, an operation of switching an application interface, or an operation of browsing application content. For example, the operation of starting an application is the operation of tapping an application icon, and the operation of browsing application content is the operation of sliding to browse application content.

According to a fourth aspect, a terminal device is provided, where the terminal device includes: a communication unit, configured to: send a first content request to an application server, where the first content request is used to request first media content and a first advertisement candidate set related to the first media content; and receive the first media content and the first advertisement candidate set from the application server; and a display unit, configured to display a first application interface, where the first application interface includes the first media content. The communication unit is further configured to: send a first advertising request to an advertising server, where the first advertising request carries the first advertisement candidate set; and receive first advertising content from the advertising server, where the first advertising content is associated with the first advertisement candidate set. The display unit is further configured to display a second application interface, where the second application interface includes the first media content and the first advertising content.

In the solution provided in the fourth aspect, when the terminal device requests the media content of the application interface, the application server may send the media content and the advertisement candidate set related to the media content to the terminal device together. Based on this, the terminal device may carry the advertisement candidate set when requesting the advertising content from the advertising server, so that the advertising server can match the advertising content corresponding to the advertisement candidate set. In this solution, because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the communication unit is further configured to: send a second content request to the application server in response to a first operation, where the second content request is used to request second media content and a second advertisement candidate set related to the second media content; and receive the second media content and the second advertisement candidate set from the application server. The display unit is further configured to display a third application interface, where the third application interface includes the second media content. The communication unit is further configured to send a second advertising request to the advertising server in response to a second operation, where the second advertising request carries an OAID and the second advertisement candidate set; and receive second advertising content from the advertising server, where the second advertising content is associated with the OAID or the second advertisement candidate set. The display unit is further configured to display a fourth application interface, where the fourth application interface includes the second media content and the second advertising content. Based on this, the terminal device includes the OAID in the advertising request to indicate a user profile to the advertising server, so that the advertising server can preferentially recommend an advertisement to the terminal device based on the OAID, to improve advertisement delivery accuracy. The user profile may indicate but is not limited to an information browsing behavior of the user, for example, a behavior of searching for information by the user, a behavior of reading information by the user, and a behavior of tapping information by the user.

In a possible implementation, the first advertisement candidate set and the second advertisement candidate set are obtained by the application server from the advertising server. Based on this, the application server may obtain the advertisement candidate set related to the media content from the advertising server, and send the advertisement candidate set related to the media content to the terminal device when the terminal device requests the media content. Because the advertisement candidate set is an identifier of the advertising content that is related to the media content and that is obtained by the terminal device from the application server, when the terminal device includes the advertisement candidate set to request the advertising content from the advertising server, the advertising server may precisely push, based on the advertisement candidate set, the advertising content related to the media content to the terminal device.

In a possible implementation, the first advertisement candidate set includes an advertising identifier of at least one piece of advertising content matching context information of the first media content, and the identifier of the at least one piece of advertising content matching the context information of the first media content includes an identifier of the first advertising content. Based on this, because the advertisement candidate set is an identifier of the advertising content that matches the context information of the media content and that is obtained by the terminal device from the application server, that is, the advertisement candidate set is an identifier of advertising content that has a highest association degree with the media content, when the terminal device includes the advertisement candidate set to request the advertising content from the advertising server, the advertising server may precisely push, based on the advertisement candidate set, the advertising content related to the media content to the terminal device.

In a possible implementation, that the communication unit sends the first content request to the application server includes: The communication unit sends the first content request to the application server in response to a third operation. Based on this, the terminal device may be triggered to obtain the media content from the application server based on the operation of the user. Certainly, when a preset condition is met, the terminal device may automatically trigger obtaining the media content from the application server. This is not limited in this application.

In a possible implementation, the third operation is an operation of starting an application, an operation of switching an application interface, or an operation of browsing application content. For example, the operation of starting an application is the operation of tapping an application icon, and the operation of browsing application content is the operation of sliding to browse application content.

In a possible implementation, that the communication unit sends the first advertising request to the advertising server includes: The communication unit sends the first advertising request to the advertising server in response to a fourth operation. Based on this, the terminal device may be triggered to obtain the advertising content from the advertising server based on the operation of the user. Certainly, when a preset condition is met, the terminal device may automatically trigger obtaining the advertising content from the advertising server. This is not limited in this application.

According to a fifth aspect, a terminal device is provided. The terminal device includes: a communication interface, configured to perform communication between devices; a memory, configured to store computer program instructions; and a processor, configured to execute the computer program instructions, to support the terminal device in implementing the method according to any one of the possible implementations of the first aspect.

According to a sixth aspect, an application server is provided. The application server includes: a communication interface, configured to perform communication between devices; a memory, configured to store computer program instructions; and a processor, configured to execute the computer program instructions, to support the application server in implementing the method according to any possible implementation of the second aspect.

According to a seventh aspect, an advertisement delivery system is provided. The advertisement delivery system includes a terminal device, an application server, and an advertising server. The advertisement delivery system is configured to implement the method according to any one of the possible implementations of the third aspect.

According to an eighth aspect, a computer-readable storage medium is provided. The computer-readable storage medium stores computer program instructions. When the computer program instructions are executed by a processor, the method according to the first aspect or any one of the possible implementations of the second aspect is implemented.

According to a ninth aspect, a computer program product including instructions is provided. When the computer program product runs on a computer, the computer is enabled to perform the method in the first aspect or any one of the possible implementations of the second aspect.

According to a tenth aspect, a chip system is provided. The chip system includes a processing circuit and a storage medium. The storage medium stores computer program instructions. When the computer program instructions are executed by the processor, the method according to the first aspect or any one of the possible implementations of the second aspect is implemented. The chip system may include a chip, or may include a chip and another discrete component.

### BRIEF DESCRIPTION OF DRAWINGS

FIG. 1 is an architectural diagram of a conventional advertisement delivery system;
FIG. 2 is a diagram of a structure of an advertisement delivery system according to an embodiment of this application;
FIG. 3 is a diagram of an advertisement delivery interface according to an embodiment of this application;
FIG. 4 is a diagram of a hardware structure of a terminal device according to an embodiment of this application;
FIG. 5A-1 and FIG. 5A-2 are a flowchart of an advertisement delivery method according to an embodiment of this application;
FIG. 5B-1 to FIG. 5B-3 are a diagram of interfaces for an advertisement display process according to an embodiment of this application;
FIG. 5C-1 and FIG. 5C-2 are a diagram of interfaces for another advertisement display process according to an embodiment of this application;
FIG. 5D-1 to FIG. 5D-3 are a diagram of interfaces for a 3^{rd} advertisement display process according to an embodiment of this application; and

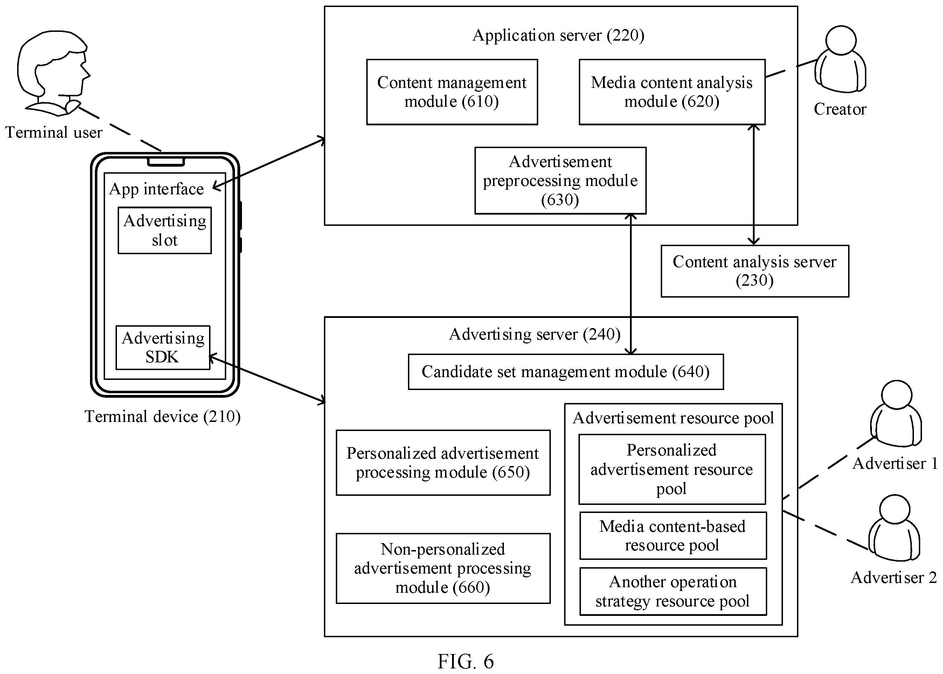

FIG. 6 is an interaction diagram of an advertisement delivery process according to an embodiment of this application.

### DESCRIPTION OF EMBODIMENTS

The following describes technical solutions in embodiments of this application with reference to accompanying drawings in embodiments of this application. In description in embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions in embodiments of this application, "a plurality of" means two or more.

The terms "first" and "second" mentioned below are merely intended for an objective of description, and shall not be understood as an indication or implication of relative importance or an implicit indication of a quantity of indicated technical features. Therefore, a feature limited by "first" or "second" may explicitly or implicitly include one or more features. In descriptions of embodiments, unless otherwise specified, "a plurality of" means two or more.

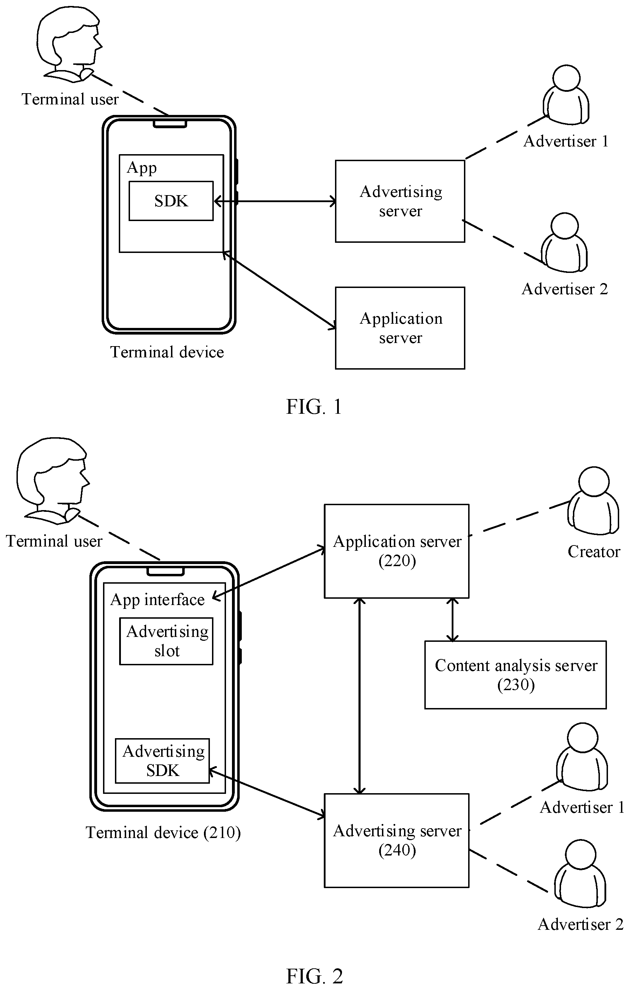

To better understand the technical solutions in this application, a working manner of a conventional advertisement delivery system is first described in detail. FIG. 1 is a diagram of an architecture of a conventional advertisement delivery system.

As shown in FIG. 1, the conventional advertisement delivery system includes an advertising server, a terminal device, and an application server.

As shown in FIG. 1, one or more APPs used to provide various services may be installed on the terminal device (an example in which one APP is installed on the terminal device is used in FIG. 1). In a process in which the terminal device runs an APP, when a user opens an APP interface, the APP interface requests media content, for example, a media stream, from a corresponding application server. If the currently displayed APP interface includes an advertising slot, the terminal device may request corresponding advertising content from the advertising server, to display the obtained advertising content in the advertising slot in the APP interface.

In an example, as shown in FIG. 1, the APP on the terminal device integrates with an advertising SDK corresponding to the advertising server. The SDK corresponding to the advertising server is an embedded advertising toolkit provided by a service provider of the advertising server for a developer of the APP, and may be advertising development code or the like. For example, a developer of a specific APP integrates advertising SDK files of a plurality of advertising servers into a development program code document. Therefore, the APP integrates SDKs of the plurality of advertising servers, and interfaces with the plurality of advertising servers. Each SDK interacts with a corresponding advertising server. For related descriptions of the SDK, refer to a conventional technology. Details are not described in embodiments of this application.

In this embodiment of this application, if the currently displayed APP interface includes the advertising slot, the APP may invoke the advertising SDK to send an advertising request to the advertising server, to request the corresponding advertising content. Correspondingly, the advertising server sends an advertising response to the APP, where the advertising response carries the advertising content. After receiving the advertising response, the terminal device may display the obtained advertising content in the advertising slot.

The advertising server shown in FIG. 1 may be configured to maintain advertisement resources of a plurality of advertisers. The advertisement resources stored in the advertising server include advertising content uploaded by an advertiser, for example, one or more of an advertising form, a copy, a link, a picture, a video, and an audio that appear in an advertisement. As shown in FIG. 1, the advertising server may receive an advertisement uploaded by an advertiser 1, or may receive an advertisement uploaded by an advertiser 2. Therefore, it may be understood that the advertising server maintains massive advertising content of a large quantity of titles and a large quantity of categories. In this case, how the advertising server selects, from the massive advertising content, advertising content with a title or a category that the user may be interested in, to implement precise advertisement delivery to a terminal user and obtain a better advertisement delivery effect is a problem that needs to be resolved.

To implement precise advertisement delivery to the terminal user and obtain the better advertisement delivery effect, in a possible implementation, the terminal device may generate context information (for example, a title, a category, or a content abstract) of an APP interface based on content of the APP interface in a process in which the user uses an APP, and include the context information in an advertising request sent to the advertising server. Correspondingly, the advertising server may send, to the terminal device based on the context information carried in the advertising request, advertising content that is with the same or similar title/category/content abstract and that matches the context information. In this example, the terminal device may obtain the content of the APP interface by analyzing an APP interface media resource obtained from the application server corresponding to the APP, and further generate the context information of the APP interface by analyzing the content of the APP interface.

However, in the foregoing solution, the terminal device needs to first obtain the APP interface media resource from the application server corresponding to the APP, and then perform analysis to obtain the context information. Further, after obtaining the context information, the terminal device requests, from the advertising server, the advertising content matching the context information. In addition, because a computing capability of the terminal device is usually limited, in this solution, an advertisement delivery delay and a load of the terminal device are increased, and further, an advertisement delivery effect is not good enough due to the inaccurate generated context information caused by the limited computing capability of the terminal device.

In another possible implementation, the terminal device may include, in the advertising request sent to the advertising server, information indicating a user profile (for example, an open anonymous device identifier (open anonymous device identifier, OAID)). Correspondingly, the advertising server may determine the user profile based on the information indicating the user profile, and further select the corresponding advertising content from an advertisement resource pool. The user profile may indicate an information browsing behavior of the user, for example, a behavior of searching for information by the user, a behavior of reading information by the user, and a behavior of tapping information by the user. The OAID is a resettable device-level identifier. As an open advertising identifier (open advertising ID), after the user enables an advertising tracking function, the OAID may be carried in the advertising request when the advertising request is sent to the advertising server, to indicate the user profile to the advertising server.

However, in consideration of personal privacy and the like, an increasing quantity of terminal users disable the advertising tracking function. After the advertising tracking function is disabled, the terminal device does not include the OAID in the advertising request. Therefore, the advertising server cannot precisely deliver an advertisement to the terminal device based on the user profile.

To provide more precise and efficient advertisement delivery experience, an embodiment of this application provides a new advertisement delivery system. FIG. 2 is a diagram of a structure of an advertisement delivery system according to an embodiment of this application.

As shown in FIG. 2, the advertisement delivery system provided in this embodiment of this application may include a terminal device 210, an application server 220, a content analysis server 230, and an advertising server 240.

One or more APPs are installed on the terminal device 210 (an example in which one APP is installed on the terminal device is used in FIG. 2). A user may browse media information and the like by using the APP installed on the terminal device 210. In an example, the APP installed on the terminal device 210 is, for example, Map, Navigation, an Audio application, a Video application, an Instant messaging application, or a News application.

The application server 220 is configured to: run a cloud service of the APP, and provide media content such as a media stream corresponding to an APP interface to the terminal device 210. In this embodiment of this application, the application server 220 is further configured to send the media content to the content analysis server 230.

The content analysis server 230 is configured to: analyze the media content in the application server 220, generate corresponding context information (for example, a title, a category, and a content abstract), and return the context information to the application server 220.

Further, the application server 220 is further configured to send, to the advertising server 240, the context information corresponding to the media content obtained from the content analysis server 230, to obtain an advertisement candidate set (ad_candidates) of advertising content matching the media content. The advertisement candidate set includes an identifier of the advertising content (for example, an advertising identifier (identifier, ID)) with a same or similar title/category/content abstract matching the context information.

The advertising server 240 may be configured to maintain advertising content of a plurality of advertisers, for example, an advertising form, a copy, a link, a picture, a video, and an audio that appear in an advertisement. As shown in FIG. 2, the plurality of advertisers (for example, only an advertiser 1 and an advertiser 2 are shown in FIG. 2) may upload, to the advertising server 240, advertising content (for example, an advertisement image, a video, a copy, and an audio) that needs to be delivered. In this embodiment of this application, the advertising server 240 may be configured to: obtain, through matching based on the context information sent by the application server 220, the advertising content with the title/category/content abstract the same as or similar to the context information, and send the advertisement candidate set of the obtained advertising content to the application server 220.

When the user opens the APP interface, the terminal device 210 may send a content request to the application server 220, to request to obtain the media content corresponding to the APP interface. Correspondingly, the application server 220 may send the advertisement candidate set and the media content together to the terminal device 210 in response to the content request.

As shown in FIG. 2, the terminal device 210 further integrates with an advertising SDK corresponding to the advertising server 240. In a process in which the terminal user uses the APP, if an advertising slot is set in the APP interface, the APP is triggered to invoke the advertising SDK to send an advertising request to the advertising server 240, to obtain the advertising content. The advertising request carries an advertising slot ID and the advertisement candidate set. The advertising server 240 may select the corresponding advertising content based on the advertisement candidate set, and return the advertising content to the terminal device 210. After obtaining the advertising content, the terminal device 210 displays the obtained advertising content in the corresponding advertising slot in the APP interface.

In this embodiment of this application, the application server 220 may be further configured to provide a content upload service for a creator. As shown in FIG. 2, the application server 220 may receive media content uploaded by the creator, and display, to the user based on a user requirement, the media content uploaded by the creator. After the creator uploads the media content to the application server 220, the application server 220 may first send the media content to the content analysis server 230 for analysis and generate corresponding context information. The creator is a user who creates and uploads a multimedia resource like a video, an audio, or a text. In a possible implementation, the creator may operate by using an APP installed on a terminal device of the creator, to upload the media content to the application server 220.

In addition, in this embodiment of this application, the advertising content maintained in the advertising server 240 may be marked with a corresponding title, category, content abstract, or the like, so that the advertising server 240 can obtain, through matching based on the context information sent by the application server 220, the advertising content that is the same as or similar to the context information in one or more aspects such as a title, a category, or a content abstract. Marks such as the title, the category, or the content abstract of the advertising content may be obtained by the advertising server 240 by analyzing the advertising content, or may be manually set by an advertiser when the advertisement is delivered. This is not limited in embodiments of this application.

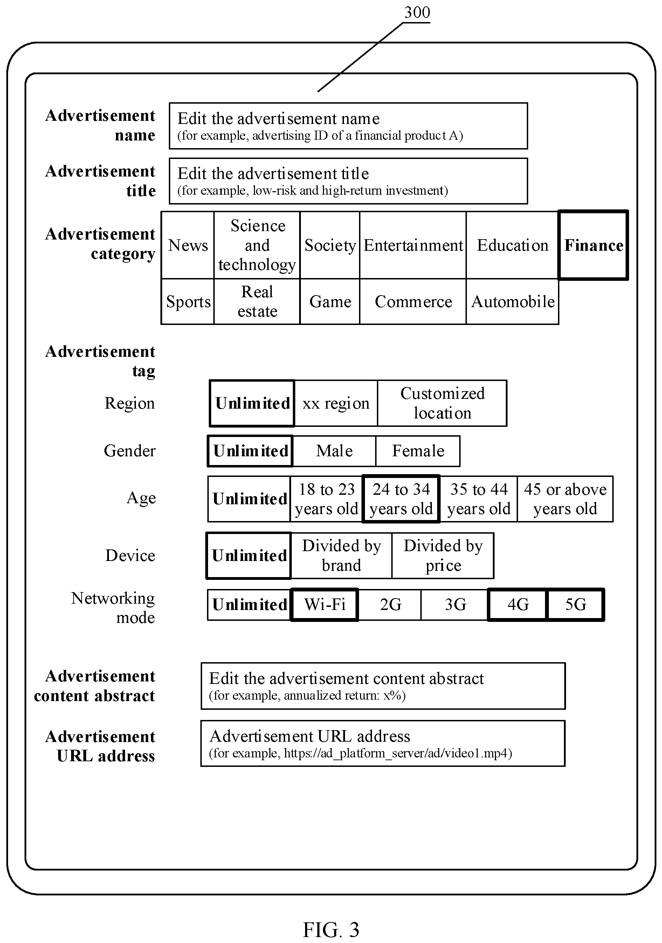

In an example, FIG. 3 is a diagram of an advertisement delivery interface according to an embodiment of this application. When the advertiser uploads, to the advertising server 240, the advertising content that needs to be delivered, the advertising server 240 may provide an advertisement delivery interface 300 shown in FIG. 3, used by the advertiser to set options such as an advertisement name, an advertisement title, an advertisement category, an advertisement tag or an advertisement content abstract, and an advertisement uniform resource locator (uniform resource locator, URL) address. The advertisement category option is one or more of options such as "News", "Science and technology", "Society", "Entertainment", "Education", "Finance", "Sports", "Real estate", "Game", "Commerce", and "Automobile" shown in FIG. 3. The advertisement tag option is one or more of a "Region" option, a "Gender of a user" option, an "Age of a user" option, a "Device" option, and a "Networking mode" option shown in FIG. 3.

For example, it is assumed that when the advertiser delivers, to the advertising server 240, an advertisement used to promote a financial product A, a developer may perform settings shown in FIG. 3 on the advertisement delivery interface. As shown in FIG. 3, the advertiser may edit, based on an actual situation of the financial product A, an advertisement name like "advertising ID of the financial product A", an advertisement title like "low-risk and high-return investment", an advertisement category like "finance", and an advertising content abstract like "annualized return: x%". In addition, as shown in FIG. 3, the advertiser may set tags about a region (for example, a region is not limited), a gender (for example, a gender is not limited), an age (for example, 24 years old to 34 years old), a used device (for example, a device is not limited), and a device networking mode (for example, Wi-Fi, 4G, and 5G) in the advertisement delivery interface based on main audiences and/or target delivery audiences of a product of the advertiser. In addition, the advertiser may edit a URL address of the advertising content on the advertising server 240, for example, https://ad_platform_server/ad/video1.mp4. It should be noted that the advertising server 240 may alternatively assign the URL address of the advertising content based on the advertising content delivered by the advertising server 240, and display the URL address to the advertiser in the advertisement delivery interface. This is not specifically limited in embodiments of this application.

Similarly, it is assumed that when the advertiser delivers, to the advertising server 240, an advertisement used to promote a financial application B, the developer may also set options such as an advertisement name, an advertisement title, an advertisement category, an advertisement tag, an advertisement content abstract, and a URL address in the advertisement delivery interface. For example, in advertising content used to promote the financial application B, an advertisement name is like "advertising ID of the financial application B", an advertisement title is like "secure, reliable, and sustainable revenue", an advertisement category is like "finance", and a URL address is like https://ad_platform_server/ad2.html.

In an example, based on the advertising content delivered by the advertiser to the advertising server 240 to promote the financial product A and the settings shown in FIG. 3 during delivery, when maintaining the advertising content of the financial product A, the advertising server 240 may maintain the advertising content of the financial product A in a multi-dimensional (for example, an advertisement name, an advertisement title, an advertisement category, and an advertisement content abstract) maintenance manner. Similarly, the advertising server 240 may also maintain the advertising content of the financial application B in the multi-dimensional maintenance manner.

In another example, based on the advertising content delivered by the advertiser to the advertising server 240 to promote the financial product A and the settings shown in FIG. 3 during delivery, when maintaining the advertising content of the financial product A, the advertising server 240 may first draw a user profile based on the advertisement tag set by the advertiser, and maintain the advertising content of the financial product A by using a user profile ID as an identifier. Similarly, the advertising server 240 may also use the user profile ID as an identifier to maintain the advertising content of the financial application B.

In some examples, the advertising server 240 may be maintained and managed by a manufacturer of the terminal device, or the advertising server 240 may be maintained and managed by a platform of a data management party cooperated with or entrusted by the manufacturer of the terminal device. This is not limited in embodiments of this application.

In some examples, the application server 220 and the content analysis server 230 may be devices of a same manufacturer.

It should be noted that FIG. 2 is merely an example of an architecture of the advertisement delivery system. In an actual advertisement delivery scenario, the advertisement delivery system may further include another apparatus or module, or modules may be combined into one apparatus. For example, in FIG. 2, only the application server 220 and the content analysis server 230 are used as two independent devices as an example. In some other examples, a function provided by the content analysis server 230 may alternatively be provided by a module in the application server 220. This is not limited in embodiments of this application.

It may be understood that, when advertisement delivery is performed based on the advertisement delivery system shown in FIG. 2, because the advertisement candidate set is determined by the advertising server 240 based on the context information of the media content, and the media content corresponds to the APP interface opened by the terminal user, the advertisement candidate set sent by the application server 220 to the terminal device 210 is an identifier of advertising content that has a highest matching degree with that in the APP interface opened by the terminal user in one or more aspects such as a title, a category, or a content abstract. Based on this, when the terminal device 210 includes the advertisement candidate set and the advertising slot ID in the APP interface to request the advertising content from the advertising server 240, the advertising server 240 may precisely deliver, to the terminal device 210, the advertising content the same as or similar to that in the APP interface opened by the user in one or more aspects such as a title, a category, or a content abstract. According to this solution, advertisement delivery can be implemented more precisely, and the context information is analyzed and pre-set on the cloud-side content analysis server 230, so that the context information of the media content can be generated in advance. This resolves problems in the conventional technology, such as a large advertisement delivery delay and a high terminal load that are caused when the terminal device generates the context information.

The terminal device in this embodiment of this application may be a desktop device, a laptop device, a handheld device, a wearable device, a smart home device, a computing device, a vehicle-mounted device, or the like, for example, a netbook, a tablet computer, a smartwatch, an ultra-mobile personal computer (ultra-mobile personal computer, UMPC), a smart camera, a netbook, a personal digital assistant (personal digital assistant, PDA), a portable multimedia player (portable multimedia player, PMP), an augmented reality (augmented reality, AR)/virtual reality (virtual reality, VR) device, a wireless device on a flight vehicle, a wireless device on a robot, a wireless device in industrial control, a wireless device in telemedicine, a wireless device in a smart grid, a wireless device in a smart city (smart city), and a wireless device in a smart home (smart home). A function and a specific structure of the terminal device are not limited in embodiments of this application.

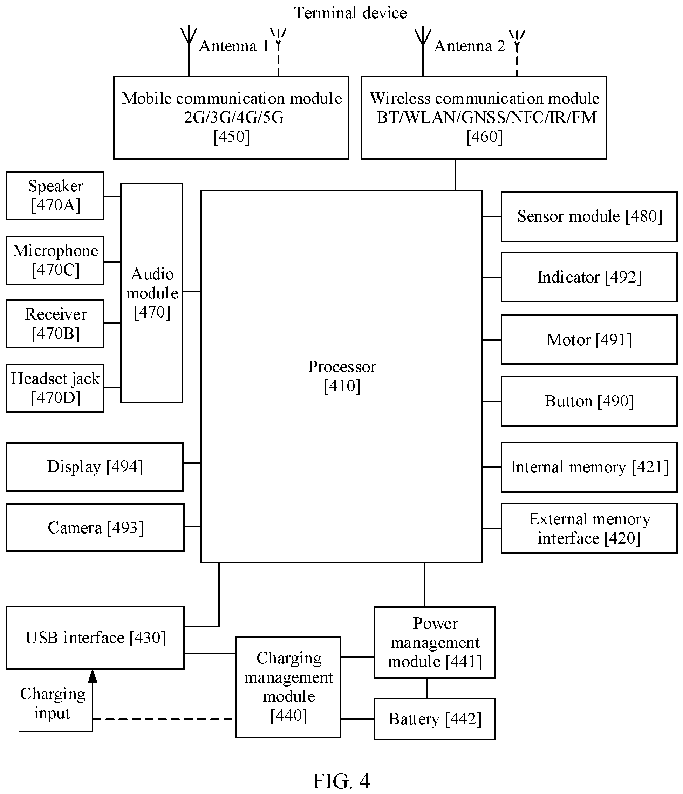

In an example, FIG. 4 is a diagram of a hardware structure of a terminal device according to an embodiment of this application.

As shown in FIG. 4, the terminal device may include a processor 410, a memory (including an external memory interface 420 and an internal memory 421), a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, and the like. The sensor module 480 may include a touch sensor. In a possible structure, the sensor module 480 may include a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that the structure shown in this embodiment of the present invention does not constitute a specific limitation on the terminal device. In some other embodiments of this application, the terminal device may include more or fewer components than those shown in the figure, or a combination of a part of the components, or splits from a part of the components, or an arrangement of different components. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may also be disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access, reduces waiting time of the processor 410, and improves system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 440 is configured to receive a charging input from the charger. The power management module 441 is configured to connect the battery 442, the charging management module 440, and the processor 410. The power management module 441 receives an input from the battery 442 and/or the charging management module 440, and supplies power to the processor 410, the internal memory 421, the display 494, the camera 493, the wireless communication module 460, and the like.

A wireless communication function of the terminal device may be implemented by using the antenna 1, the antenna 2, the mobile communication module 450, the wireless communication module 460, the modem processor, the baseband processor, and the like.

The antenna 1 and the antenna 2 are configured to: transmit and receive electromagnetic wave signals. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

In this embodiment of this application, the antenna 1 and/or the antenna 2 of the terminal device may be configured to support the terminal device in sending a content request to the application server 220, to obtain media content and an advertisement candidate set from the application server 220. In addition, the antenna 1 and/or the antenna 2 of the terminal device may be configured to support the terminal device in sending, to the advertising server 240, an advertising request that carries an advertising slot ID and an advertisement candidate set, to obtain advertising content corresponding to the advertisement candidate set from the advertising server 240.

The mobile communication module 450 may provide a wireless communication solution that includes 2G/3G/4G/5G or the like and that is applied to the terminal device. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal modulated by the modem processor, and convert an amplified signal into an electromagnetic wave for radiation through the antenna 1. In some embodiments, at least some functional modules of the mobile communication module 450 may be disposed in the processor 410. In some embodiments, at least some functional modules of the mobile communication module 450 and at least some modules of the processor 410 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal via an audio device (which is not limited to the loudspeaker 470A, the receiver 470B, or the like), or displays an image or a video through the display 494. In some embodiments, the modem processor may be an independent component. In some other embodiments, the modem processor may be independent of the processor 410, and is disposed in a same device as the mobile communication module 450 or another functional module.

The wireless communication module 460 may provide a wireless communication solution that is applied to the terminal device and that includes WLAN (for example, a Wi-Fi network), Bluetooth (BT), ZigBee, a global navigation satellite system (global navigation satellite system, GNSS), frequency modulation (frequency modulation, FM), a near field communication (near field communication, NFC) technology, an infrared (infrared, IR) technology, or the like. The wireless communication module 460 may be one or more components integrating at least one communication processor module. The wireless communication module 460 may provide hardware support of the at least one communication processor module, and provide software support of the at least one communication processor module (for example, a Wi-Fi driver module, a Bluetooth driver module, or a ZigBee driver module). The wireless communication module 460 receives an electromagnetic wave through the antenna 2, performs frequency modulation and filtering processing on the electromagnetic wave signal, and sends a processed signal to the processor 410. The wireless communication module 460 may further receive a to-be-sent signal from the processor 410, perform frequency modulation and amplification on the signal, and convert a processed signal into an electromagnetic wave for radiation through the antenna 2.

In some embodiments, the antenna 1 of the terminal device is coupled to the mobile communication module 450, and the antenna 2 is coupled to the wireless communication module 460, so that the terminal device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device implements a display function by using the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. In some embodiments, the terminal device may include one or N displays 494, where N is a positive integer greater than 1.

In this embodiment of this application, the GPU and the display 494 may be configured to support the terminal device in displaying an APP interface. Media content obtained from the application server 220, for example, a video, is displayed in the APP interface. The APP interface further includes an advertising slot, and advertising content obtained from the advertising server 240 is displayed in the advertising slot.

The terminal device may implement an image shooting function by using an ISP, the camera 493, a video codec, the GPU, the display 494, the application processor, and the like. In embodiments of this application, the ISP, the camera 493, the video codec, the GPU, and the display 494 may support a video call between the terminal device and another device.

The external memory interface 420 may be configured to connect to an external memory card, for example, a Micro SD card, to extend a storage capability of the terminal device. The external memory card communicates with the processor 410 through the external memory interface 420, to implement a data storage function.

The internal memory 421 may be configured to store computer executable program code. For example, a computer program may include an operating system program and an application. The executable program code includes instructions. The processor 410 runs the instructions stored in the internal memory 421, to perform various function applications and data processing of the terminal device. The internal memory 421 may include a program storage region and a data storage region. The program storage region may store an operating system, an application required by at least one function, and the like. The data storage region may store data, and the like created during use of the terminal device. In addition, the internal memory 421 may include a high-speed random access memory, and may further include a non-volatile memory, for example, at least one magnetic disk storage component, a flash memory, or a universal flash storage (universal flash storage, UFS). The processor 410 runs the instructions stored in the internal memory 421 and/or the instructions stored in the memory disposed in the processor, to perform various function applications of the terminal device and data processing.

The terminal device may implement an audio function, for example, music playing or recording, via the audio module 470, the loudspeaker 470A, the receiver 470B, the microphone 470C, the application processor, and the like. For specific working principles and functions of the audio module 470, the loudspeaker 470A, the receiver 470B, and the microphone 470C, refer to descriptions in a conventional technology.

In addition, for descriptions of hardware such as the button 490, the motor 491, and the indicator 492, refer to the conventional technology. Details are not described again in embodiments of this application.

It may be understood that, a structure shown in FIG. 4 in this application does not constitute a specific limitation on the terminal device. In some other embodiments of this application, the terminal device may include more or fewer components than those shown in the figure, or a combination of a part of the components, or splits from a part of the components, or an arrangement of different components. The components shown in the figure may be implemented by hardware, software, or a combination of software and hardware.

The following uses the structure of the advertisement delivery system shown in FIG. 2 as an example to specifically describe, with reference to a specific example, an advertisement delivery method provided in an embodiment of this application.

FIG. 5A-1 and FIG. 5A-2 are a flowchart of an advertisement delivery method according to an embodiment of this application. As shown in FIG. 5A-1 and FIG. 5A-2, the advertisement delivery method in this embodiment of this application may include the following four stages.

Stage 1: Media content context obtaining stage.

Stage 2: Advertisement candidate set obtaining stage.

Stage 3: Media content request stage.

Stage 4: Advertising content request stage.

Stage 1 may include S501 to S504 shown in FIG. 5A-1 and FIG. 5A-2, Stage 2 may include S505 to S507 shown in FIG. 5A-1 and FIG. 5A-2, Stage 3 may include S508 and S509 shown in FIG. 5A-1 and FIG. 5A-2, and Stage 4 may include S510 to S513 shown in FIG. 5A-1 and FIG. 5A-2. S501 to S513 are specifically below.

S501: An application server receives first media content uploaded by a creator.

The first media content is, for example, video content, audio content, or text content. This is not specifically limited in this application.

In an example, the first media content is, for example, a video that is uploaded by the creator and that is about how a person C analyzes impact of an event that a company A takes over a company B on a yield of an industry-related product. The first media content may specifically include "On xx xx, 2022, the company A took over the company B. About this, the person C commented that this takeover for the company B by the company A has great impact on the yield of the industry-related product. As of 24:00 yesterday, an industry average yield decreased by x% year-on-year...".

S502: The application server 220 sends the first media content to a content analysis server 230.

The application server 220 sends the first media content to the content analysis server 230, so that the content analysis server 230 analyzes the first media content, obtains first context information of the first media content, and then returns the first context information to the application server 220, to support the application server 220 in subsequently obtaining an advertisement candidate set corresponding to the first media content.

In an example, the application server 220 may send the first media content to the content analysis server 230 according to a hypertext transfer protocol (hypertext transfer protocol, HTTP) protocol via an HTTP request (Request). The HTTP protocol is a simple request and response protocol, and the HTTP protocol usually runs according to a transmission control protocol (transmission control protocol, TCP). In the HTTP protocol, a format and content of messages exchanged between a client and a server are specified. For related descriptions of the HTTP protocol and the TCP protocol, refer to a conventional technology. Details are not described in embodiments of this application.

For example, it is assumed that the first media content is the video about analyzing the impact of the event that the company A took over the company B on the yield of the industry-related product. An HTTP request message that is sent by the application server 220 to the content analysis server 230 and that includes the first media content may be shown in the following Message 1.

### Message 1:

```
         POST https://content_analysis_server/content/analyze HTTP/1.1
         Host: content_analysis_server
         content="On xx xx, 2022, the company A took
         over the company B. About this, the person C commented
         that this takeover for the company B by the company
         A has great impact on the yield of the
         industry-related product.
         As of 24:00 yesterday, an industry average
         yield decreased by x% year-on-year...".
```

In Message 1, content is the first media content; "https://content_analysis_server/content/analyze" is a URL address; "Host" indicates a server address corresponding to the message, the server address may be usually an IP, or may be a domain name (for example, "content_analysis_server" in Message 1), and a port number may further be manually specified; and "HTTP/1.1" is a protocol version number.

S503: The content analysis server 230 analyzes the first media content, to obtain the first context information of the first media content.

The first context information includes one or more of a title (title), a category (category), a content abstract (abstract), and the like of the first media content.

For example, it is assumed that the first media content is the video including "On xx xx, 2022, the company A took over the company B. About this, the person C commented that this takeover for the company B by the company A has great impact on the yield of the industry-related product. As of 24:00 yesterday, an industry average yield decreased by x% year-on-year...". The first context information of the first media content may include one or more of the title "financial product yield" of the first media content, the category "finance" of the first media content, and the content abstract "company A", "company B", and/or "the financial product yield fell" of the first media content.

In an example, processing performed by the content analysis server 230 on the first media content may include but is not limited to performing content compliance filtering processing and generating content tagging (for example, keyword tagging). Analyzing performed by the content analysis server 230 on the first media content may include but is not limited to deep analysis and analyzing content tagging.

For example, the content analysis server 230 may perform analysis and keyword extraction on the first media content by using a language algorithm/model. The language algorithm/model is a semantic vector algorithm/model, for example, a BERT (bidirectional encoder representations from transformers) model, a robustly optimized BERT approach (robustly optimized BERT approach, RoBERTa) model, a lite BERT (A lite BERT, ALBERT) model, an enhanced representation through knowledge integration (enhanced representation through knowledge integration, ERNIE) model, or an ELECTRA (efficiently learning an encoder that classifies token replacements accurately) model. For the language algorithm/model used for media content analysis, refer to a conventional technology. This is not specifically limited in embodiments of this application.

The semantic vector algorithm/model is used to perform text classification and text sequence tagging on information. The BERT model is used as an example. The media content may be classified based on text classification (for example, bert-dense), for example, determining that the media content belongs to a finance category, an entertainment category, a science and technology category, a sports category, a real estate category, a game category, a commerce category, an agriculture category, an education category, or an automobile category, and performing refined word segmentation on texts in the media content, for example, Chinese word segment (Chinese word segment, CWS), part-of-speech tagging (part-of-speech tagging, POS), or named entity recognition (named entity recognition, NER). For specific descriptions of the semantic vector algorithm/model, refer to a conventional technology.

S504: The application server 220 obtains the first context information of the first media content from the content analysis server 230.

In an example, the content analysis server 230 may send the first context information to the application server 220 via an HTTP response (Respond).

For example, it is assumed that the first media content is the video including "On xx xx, 2022, the company A took over the company B. About this, the person C commented that this takeover for the company B by the company A has great impact on the yield of the industry-related product. As of 24:00 yesterday, an industry average yield decreased by x% year-on-year...". An HTTP response message that is sent by the content analysis server 230 to the application server 220 and that includes the first context information may be shown in the following Message 2.

### Message 2:

```
         HTTP/1.1 200 OK
         Content-Type: application/json; charset=utf-8
         Content-Length: 60
         {"title": "financial product yield", "category":
         "finance", "abstract": ["company A", "company B", "the
         financial product yield fell"]}.
```

In Message 2, "title" is the title; "category" is the category; "abstract" is the content abstract; "HTTP/1.1" is the protocol version number; "200" is a status code; "OK" is a status code explanation; "Content-Type" is used to identify a data format of a message body; "charset=utf-8" indicates that a character set used to identify the message is a character using utf-8, that is, a commonly known English character set; and "Content-Length" is used to identify a length of the message body, and a length unit is usually bytes.

It should be noted that, in the flowchart shown in FIG. 5A-1 and FIG. 5A-2 in this application, that the content analysis server 230 analyzes the first media content, to obtain the first context information of the first media content is merely used as an example. A specific execution body used to analyze the media content, to obtain the context information corresponding to the media content is not limited in this application. For example, in another possible implementation, the application server 220 may alternatively analyze the first media content, to obtain the first context information of the first media content. For example, the application server 220 may include a module configured to: analyze media content and generate context information. The module may analyze the first media content, to obtain the first context information of the first media content.

In addition, it should be noted that, in the flowchart shown in FIG. 5A-1 and FIG. 5A-2 in this application, that the first media content is uploaded by the creator to the application server 220 is merely used as an example. A specific source of the media content is not limited in this application. In some other embodiments, the first media content may be uploaded by an operator of the application server 220 to the application server 220. For example, the operator of the application server 220 may obtain the first media content from another cooperation platform and upload the first media content to the application server 220. For another example, the operator of the application server 220 may upload the first media content created by the creator to the application server 220. For another example, the application server 220 may provide a content upload service for the creator, and the creator of the first media content may upload the first media content created by the creator to the application server 220.

For any one of the foregoing scenarios of uploading the first media content, in a possible implementation, when the first media content is uploaded to the application server 220, the application server 220 may send the first media content to the application server 220 for processing and analysis, to obtain the first context information of the first media content. Alternatively, when the first media content is uploaded to the application server 220, the application server 220 may analyze the first media content, to obtain the first context information of the first media content.

S505: The application server 220 sends an advertisement candidate set request to an advertising server 240, where the advertisement candidate set request carries the first context information.

The advertisement candidate set request is used to request to obtain the advertisement candidate set matching the first context information.

In an example, the application server 220 may send the advertisement candidate set request to the advertising server 240 via an HTTP request. For example, the advertisement candidate set request sent by the application server 220 to the advertising server 240 may be shown in the following Message 3.

### Message 3:

```
         POST https://ad_platform_server/context_ad/prefetch HTTP/1.1
         Host: ad_platform_server
         Connection: keep-alive
         Content-Length: 77
         {"context_info": {"title": "financial product yield",
         "category": "finance", "abstract": ["company A",
 "company B", "the financial product yield fell"]}}.
```

In Message 3, context_info is the first context information, and "Connection: Keep-Alive" is a field used for HTTP persistent connection. For explanations of other fields, refer to the descriptions of Message 1 and Message 2. Details are not described herein again.

S506: The advertising server 240 obtains a first advertisement candidate set from an advertisement resource through matching based on the first context information.

The advertisement resource includes advertising content that is uploaded by a plurality of advertisers and that is maintained by the advertising server 240, for example, one or more of an advertising form, a copy, a link, a picture, a video, and an audio that appear in an advertisement. This is not limited in embodiments of this application.

The first advertisement candidate set includes an identifier of the advertising content (for example, an advertising content ID) that is with a same or similar title/category/content abstract and that matches the first context information.

In a possible implementation, the advertising server 240 may select corresponding advertising content from the advertisement resource based on one or more of a title, a category, a content abstract, and the like that are indicated by the first context information, and determine an identifier of the selected advertising content (for example, the advertising content ID). It may be understood that all the advertising content in the advertisement resource maintained in the advertising server 240 is marked with a corresponding title, category, content abstract, or the like, so that the advertising server 240 can obtain, through matching based on the first context information sent by the application server 220, the advertising content that is the same as or similar to the first context information in one or more aspects such as a title, a category, or a content abstract.

Marks such as the title, the category, or the content abstract of the advertising content may be obtained by the advertising server 240 by analyzing the advertising content, or may be manually set by an advertiser when the advertisement is delivered. This is not limited in embodiments of this application.

For example, it is assumed that the advertising server 240 maintains advertising content of a financial product A and advertising content of a financial application B in a multi-dimensional maintenance manner. An advertisement name of the financial product A is "advertising ID of the financial product A", an advertisement title is "low-risk and high-return investment", an advertisement category is "finance", and an advertisement content abstract is, for example, "annualized return: x%"; and an advertisement name of the financial application B is "advertising ID of the financial application B", an advertisement title is "secure, reliable, and sustainable revenue", an advertisement category is "finance", and an advertisement content abstract is "highest annualization rate in the industry". When the advertising server 240 receives, from the application server 220, the first context information whose title is "financial product yield", category is "finance", and content abstract includes "company A", "company B", and "the financial product yield fell", the advertising server 240 may select, from the advertisement resource through matching, the advertising content of the financial product A and the advertising content of the financial application B that have a high matching degree with the first context information, and the advertising ID of the financial product A and the advertising ID of the financial application B are used as the first advertisement candidate set to be sent to the application server 220.

S507: The advertising server 240 sends the first advertisement candidate set to the application server 220.

In an example, the advertising server 240 may send the first advertisement candidate set to the application server 220 via an HTTP response. For example, an HTTP response message that includes the first advertisement candidate set and that is sent by the advertising server 240 to the application server 220 may be shown in the following Message 4.

### Message 4:

```
         HTTP/1.1 200 OK
         Content-Type: application/json; charset=utf-8
         Content-Length: 83
         {"ad_candidates": ["ad_content_1", "ad_content_2"]}.
```

In Message 4, "ad_candidates" is the first advertisement candidate set; and "ad_content_1", "ad_content_2", and "ad_content_1" and "ad_content_2" are advertising IDs of the advertising content matching the first context information. For example, "ad_content_1" is the advertising ID of the financial product A, and "ad_content_2" is the advertising ID of the financial application B. For explanations of other fields, refer to the descriptions of Message 1 and Message 2. Details are not described herein again.

S508: A terminal device 210 sends a content request to the application server 220, where the content request is used to request the first media content corresponding to a first interface.

The content request may carry a first interface identifier and information about a serving channel of the first interface. The first interface identifier and the information about the serving channel of the first interface may be used by the application server 220 to determine media content corresponding to the first interface.

In some examples, the content request may further carry but is not limited to user account information (for example, an account ID) used to log in to a first application corresponding to the first interface. The user account information used to log in to the first application may be used by the application server 220 to perform content obtaining permission verification.

In some examples, the terminal device 210 may send the content request to the application server 220 when receiving a first operation of the user. The application server 220 is a network-side device configured to run a cloud service of an application (it is assumed to be the first application) corresponding to the first interface.

For example, the first application may include but is not limited to Map, Navigation, an Audio application, a Video application, an Instant messaging application, a News application, and the like, and correspondingly, the first interface may include but is not limited to a Map interface, a Navigation interface, an Audio application interface, a Video application interface, an Instant messaging application interface, a News application interface, and the like. This is not specifically limited in embodiments of this application.

In an example, the first operation of the user may include but is not limited to an operation of starting an application by the user, an operation of switching an application interface by the user, an operation of browsing application content by the user, or the like.

For example, the first operation of the user may be an operation of tapping a first application icon by the user. In this case, the terminal device sends the content request to the application server, where the content request is used to request media content corresponding to a main page of the first application, or is used to request media content corresponding to a task that is of the first application and that is run on the terminal device.

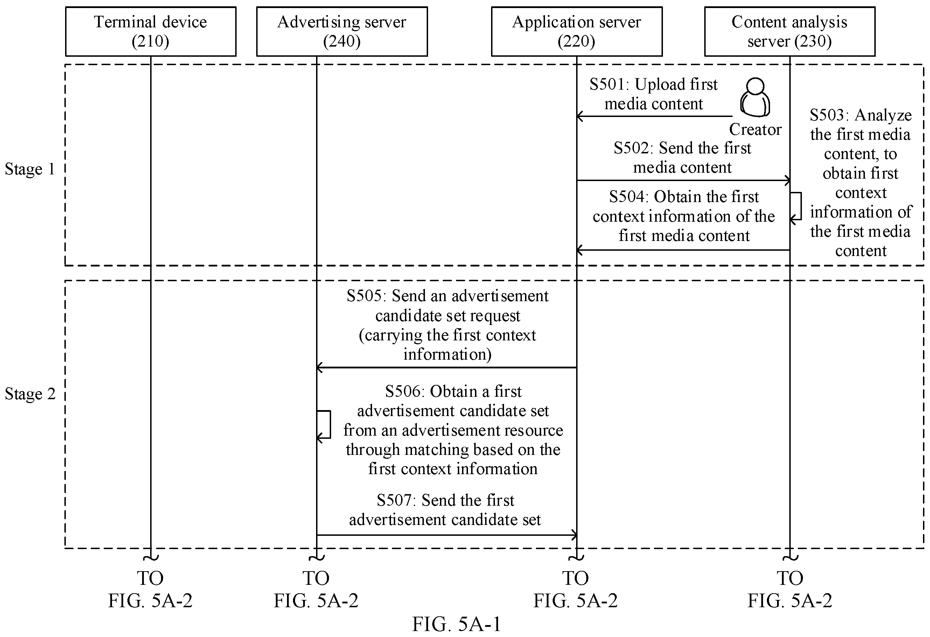

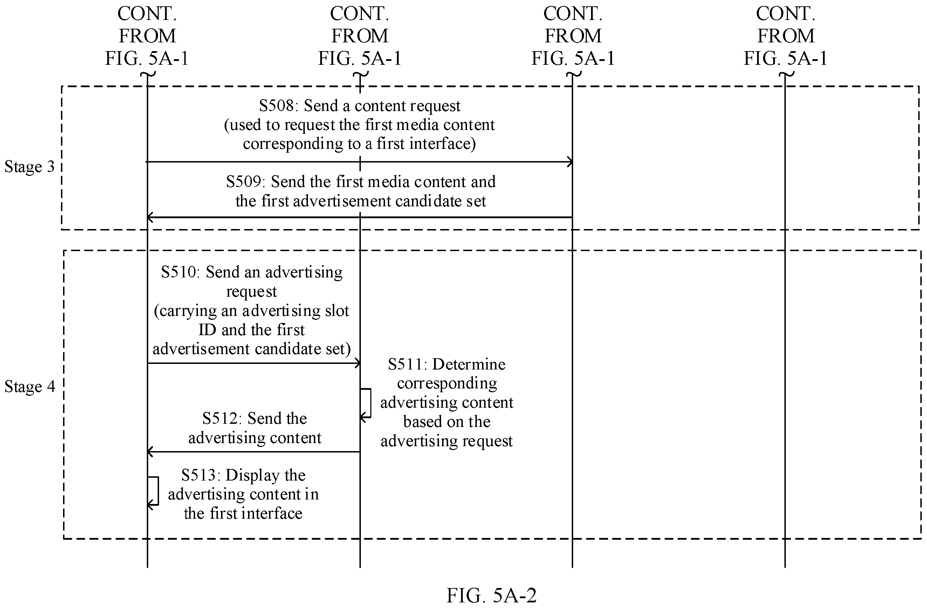

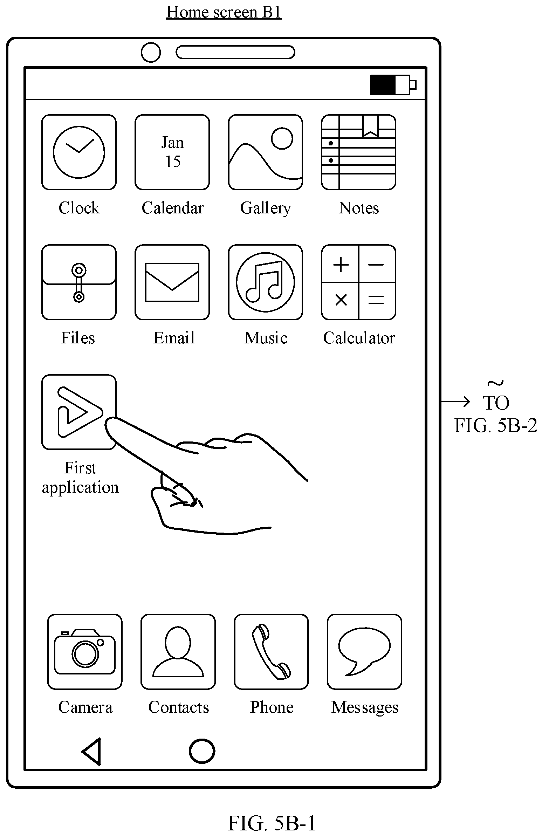

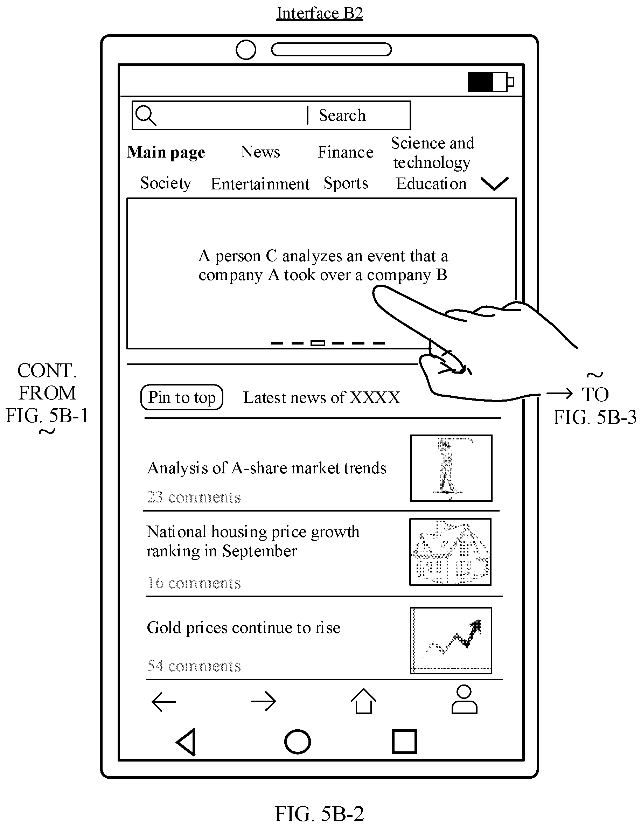

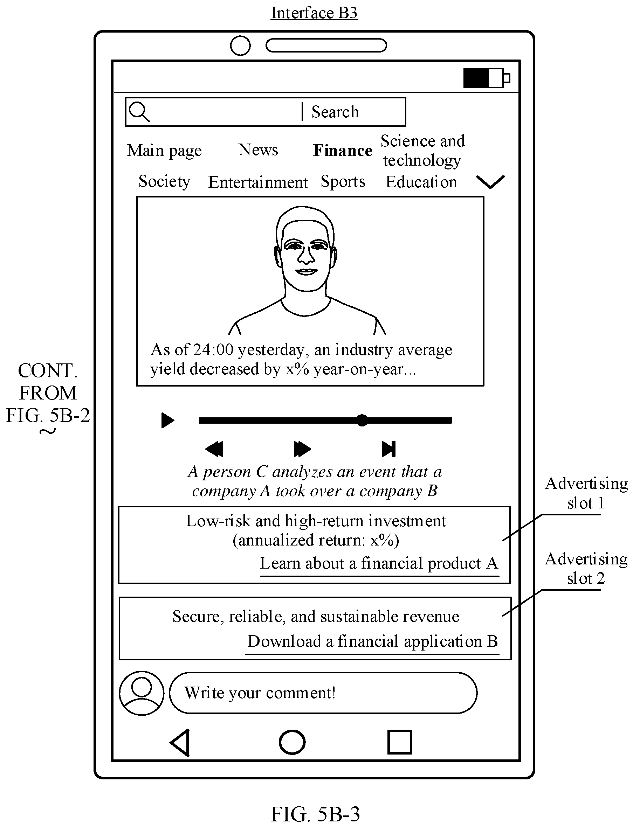

FIG. 5B-1 to FIG. B-3 are a diagram of interfaces for an advertisement display process according to an embodiment of this application by using an example in which the task of the first application is not run on the terminal device currently. As shown in FIG. 5B-1 to FIG. 5B-3, when the terminal device displays a home screen B1 including the first application icon, in response to receiving the operation of tapping the first application icon on the home screen of the terminal device by the user, the terminal device 210 sends a content request to the application server 220, where the content request is used to request media content corresponding to a first application interface B2 and an advertisement candidate set related to the media content. The first application interface B2 includes a thumbnail page of "A person C analyzes an event that a company A took over a company B". The media content corresponding to the main page of the first application includes media content corresponding to an interface of "A person C analyzes an event that a company A took over a company B". When the terminal device displays, based on the media content that corresponds to the first application interface B2 and that is obtained from the application server 220, the first application interface B2 that includes the thumbnail page of "A person C analyzes an event that a company A took over a company B", in response to receiving an operation of tapping the thumbnail page of "A person C analyzes an event that a company A took over a company B", the terminal device 210 sends an advertising request to the advertising server 240 based on an advertisement candidate set related to the media content, to request advertising content to be displayed in an interface B3 of "A person C analyzes an event that a company A took over a company B". When receiving the advertising content from the advertising server 240, the terminal device 210 displays the received advertising content (the advertising content of the financial product A and the advertising content of the financial application B shown in FIG. 5B-3) in an advertising slot 1 and an advertising slot 2 in the interface B3 of "A person C analyzes an event that a company A took over a company B".

In the example of the advertisement display process shown in FIG. 5B-1 to FIG. 5B-3, the first operation is the operation of tapping the first application icon on the home screen of the terminal device by the user, the first interface is the interface of "A person C analyzes an event that a company A took over a company B", and the first media content is the media content corresponding to the interface of "A person C analyzes an event that a company A took over a company B".

For another example, the first operation of the user may be an operation of switching an application interface by the user on a second interface. In this case, the terminal device sends a content request to the application server, where the content request is used to request media content corresponding to a next-level interface.

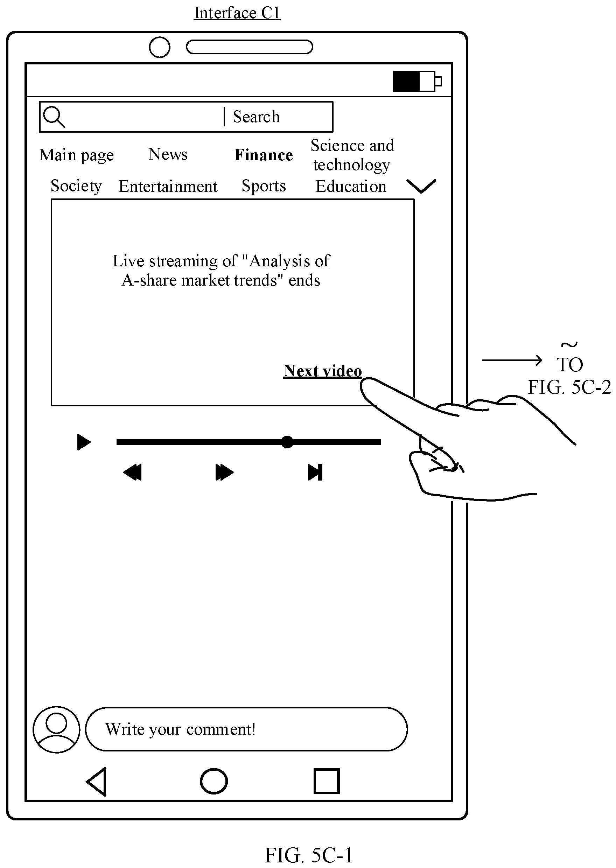

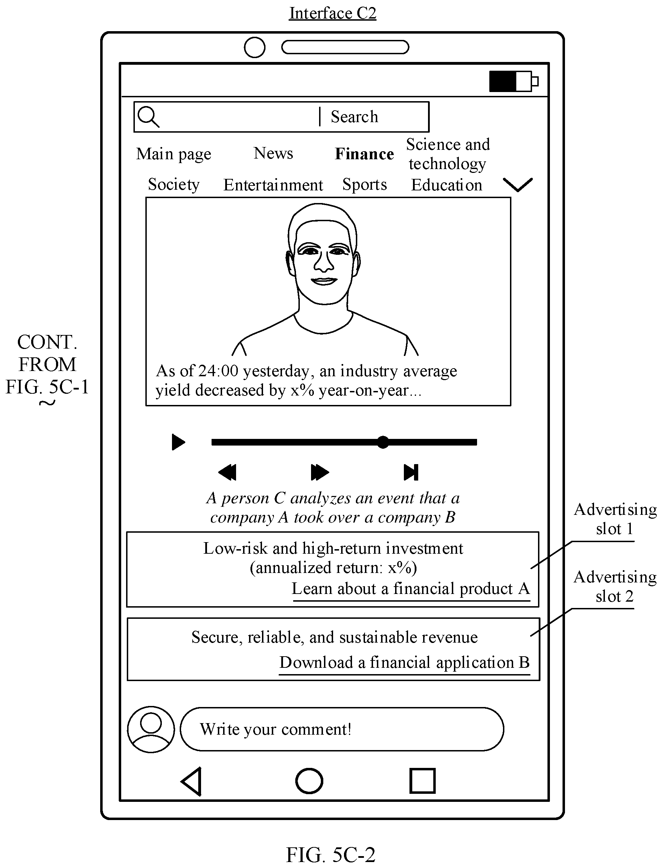

FIG. 5C-1 and FIG. 5C-2 are a diagram of interfaces for another advertisement display process according to an embodiment of this application. As shown in FIG. 5C-1 and FIG. 5C-2, when the terminal device displays an interface C1 including a "Next video" button, in response to receiving an operation of tapping the "Next video" button by the user, the terminal device 210 sends a content request to the application server 220, where the content request is used to request media content corresponding to "Next video" (for example, a video interface of "A person C analyzes an event that a company A took over a company B") and an advertisement candidate set related to the media content. Then, the terminal device sends an advertising request to the advertising server 240 based on the advertisement candidate set that is related to the media content and that is obtained from the application server 220, to request advertising content to be displayed on a "Next video" interface C2 (that is, the video interface of "A person C analyzes an event that a company A took over a company B"). When receiving the advertising content from the advertising server 240, the terminal device 210 displays the interface B3 of "A person C analyzes an event that a company A took over a company B", and displays the received advertising content (for example, the advertising content of the financial product A and the advertising content of the financial application B shown in FIG. 5C-2) in the advertising slot 1 and the advertising slot 2 in the interface B3.

In the example of the advertisement display process shown in FIG. 5C-1 and FIG. 5C-2, the first operation is the operation of tapping the "Next video" button by the user, the first interface is the video interface of "A person C analyzes an event that a company A took over a company B", and the first media content is the media content corresponding to the video interface of "A person C analyzes an event that a company A took over a company B".

For another example, the first operation of the user may be an operation of sliding to browse application content by the user. In this case, the terminal device sends a content request to the application server, where the content request is used to request media content of a sliding interface corresponding to the sliding operation of the user.

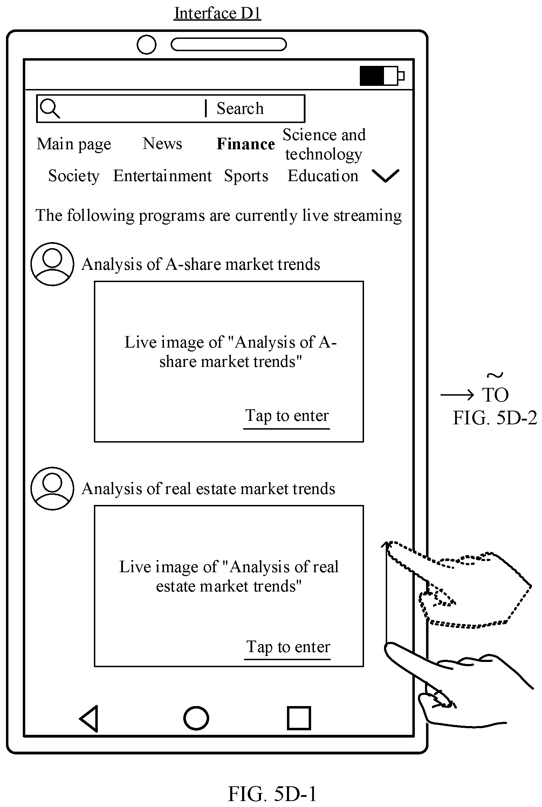

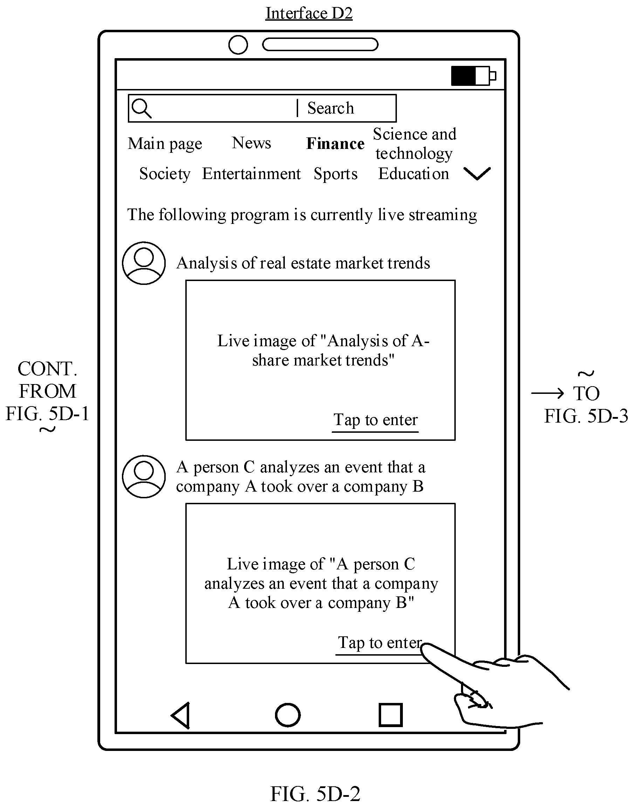

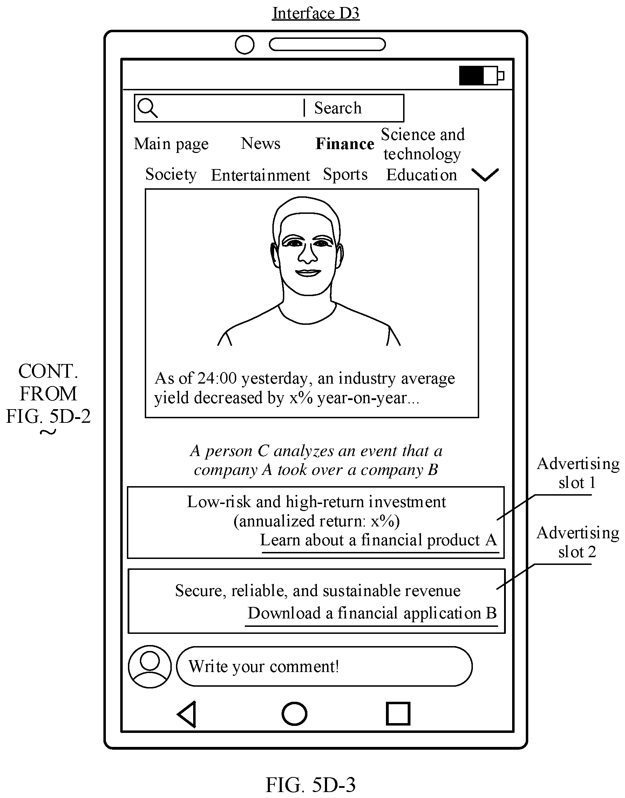

FIG. 5D-1 to FIG. 5D-3 are a diagram of interfaces for a 3^{rd} advertisement display process according to an embodiment of this application. As shown in FIG. 5D-1 to FIG. 5D-3, the terminal device displays a slidable interface D1, and the interface D1 includes one or more thumbnail video boxes of live images. In response to receiving a down-up sliding operation performed by the user on the interface D1, the terminal device 210 sends a content request to the application server 220, where the content request is used to request to obtain media content of a latest slidable interface D2 and an advertisement candidate set related to the media content. The latest slidable interface D2 includes a thumbnail video box of a live image of "A person C analyzes an event that a company A took over a company B". The media content of the latest sliding interface D2 includes media content corresponding to the live image of "A person C analyzes an event that a company A took over a company B". When the terminal device displays, based on the media content obtained from the application server 220, the slidable interface D2 including the thumbnail video box of the live image of "A person C analyzes an event that a company A took over a company B", in response to receiving an operation of entering a live image D3 of "A person C analyzes an event that a company A took over a company B" by the user, the terminal device 210 sends an advertising request to the advertising server 240 based on the advertisement candidate set related to the media content, to request advertising content to be displayed on the live image D3 of "A person C analyzes an event that a company A took over a company B". When receiving the advertising content from the advertising server 240, the terminal device 210 displays the received advertising content (the advertising content of the financial product A and the advertising content of the financial application B shown in FIG. 5D-3) in an advertising slot 1 and an advertising slot 2 on the live image D3 of "A person C analyzes an event that a company A took over a company B".

In the example of the advertisement display process shown in FIG. 5D-1 to FIG. 5D-3, the first operation is the down-up sliding operation performed by the user on the interface D1, the first interface is the live image of "A person C analyzes an event that a company A took over a company B", and the first media content is the media content corresponding to the live image of "A person C analyzes an event that a company A took over a company B".

It should be noted that the foregoing trigger condition for sending a content request to the application server 220 by the terminal device 210 is merely used as an example. In some embodiments, when a preset condition is met, the terminal device 210 may automatically trigger sending of a content request to the application server 220. For example, when the terminal device displays the interface C1 including the "Next video" button shown in FIG. 5C-1, after a preset time (for example, 3 seconds) after live streaming of "Analysis of A-share market trends" ends, if no operation of the user is detected, the terminal device 210 automatically triggers sending of a content request to the application server 220, where the content request is used to request media content (that is, the first media content) corresponding to a next video (that is, the first interface, for example, the video interface about "A person C analyzes an event that a company A took over a company B"), to automatically play the next video.

In an example, the terminal device 210 may send a content request to the application server 220 via an HTTP request. For example, the content request sent by the terminal device 210 to the application server 220 may be shown in the following Message 5.

### Message 5:

```
         POST https://media_content_server/content/list HTTP/1.1
         Host: media_content_server
         Connection: keep-alive
         Content-Length: 62
         {"account_id": "user1", "page": "main", "channel": "finance"}.
```

In Message 5, "account_id" is a user account ID (for example, "user1") used to log in to the first application corresponding to the first interface; "page" is the first interface identifier (where "main" means a main page of the application); and "channel" is information about the serving channel of the first interface (where "finance" means a financial channel). For explanations of other fields, refer to the descriptions of Message 1 and Message 2. Details are not described herein again.

It should be noted that a specific time sequence relationship between S505 and S501 to S504 is not limited in embodiments of this application. For example, in some examples, S505 may be performed synchronously with any step in S501 to S504. For another example, in some other examples, S505 may be performed after S504.

S509: The application server 220 sends the first media content and the first advertisement candidate set to the terminal device 210.

The first media content is determined by the application server 220 based on the first interface identifier and the information about the serving channel of the first interface that are carried in the content request. The first advertisement candidate set includes an advertising ID that is of advertising content matching the context information (namely, the first context information) of the first media content and that is obtained by the application server 220 from the advertising server 240.

For example, the first media content may include "On xx xx, 2022, the company A took over the company B. About this, the person C commented that this takeover for the company B by the company A has great impact on the yield of the industry-related product. As of 24:00 yesterday, an industry average yield decreased by x% year-on-year...". The first media content sent by the application server 220 to the terminal device 210 includes a video stream of "A person C analyzes an event that a company A took over a company B". The first advertisement candidate set sent by the application server 220 to the terminal device 210 includes an advertisement candidate set that includes the advertising ID of the financial product A and the advertising ID of the financial application B and that matches the first context information.

In some examples, if the content request from the terminal device 210 includes the user account information (for example, an account ID) used to log in to the first application corresponding to the first interface, and the first media content is media content open to a preset user (for example, a VIP member user), the application server 220 may further perform content obtaining permission verification, and when determining that the user account information used to log in to the first application is an account with preset permission, send, to the terminal device 210, the first advertisement candidate set and the first media content determined based on the first interface identifier.

In an example, the application server 220 may send the first media content and the first advertisement candidate set to the terminal device 210 via an HTTP response. For example, an HTTP response message that is sent by the application server 220 to the terminal device 210 and that includes the first media content and the first advertisement candidate set may be shown in the following Message 6.

### Message 6:

```
         HTTP/1.1 200 OK;
         Content-Type: application/json; charset=utf-8;
         Content-Length: 234;
         {"app_contents": [{"title": "sample_title", "content_text": "sample content text "},],
         "ad_candidates": ["ad_content_1", "ad_content_2"]}.
```

In Message 6, "app_contents" is the first media content, "title" is the title of the first media content, "content_text" is a body of the first media content, and "ad_candidates" is the first advertisement candidate set. For explanations of other fields, refer to the descriptions of Message 1 and Message 2. Details are not described herein again.

It should be noted that, in the example shown in FIG. 5A-1 and FIG. 5A-2 in this application, that the first interface includes an advertising slot is merely used as an example. In some other embodiments, if the first interface does not include an advertising slot, when determining, based on the first interface identifier, that the first interface does not include an advertising slot, the application server 220 may not send the first advertisement candidate set corresponding to the first media content to the terminal device 210. Alternatively, optionally, although the application server 220 determines, based on the first interface identifier, that the first interface does not include an advertising slot, the application server 220 may still send the first advertisement candidate set corresponding to the first media content to the terminal device 210 in a processing manner shown in FIG. 5A-1 and FIG. 5A-2. This is not specifically limited in embodiments of this application.

S510: The terminal device 210 sends the advertising request to the advertising server 240, where the advertising request carries an advertising slot ID and the first advertisement candidate set.

The advertising request is used to request the advertising content to be displayed in one or more advertising slots (the advertising slot 1 and the advertising slot 2 shown in FIG. 5B-3, FIG. 5C-2, or FIG. 5D-3) in the first interface. The advertising slot ID carried in the advertising request is an advertising slot ID of the one or more advertising slots in the first interface. The advertising slot ID is used by the advertising server 240 to select advertising content that can adapt to an advertising slot size.

In some examples, the terminal device 210 may send the advertising request to the advertising server 240 when receiving a second operation of the user. For example, the second operation may be the operation of tapping the thumbnail page of "A person C analyzes an event that a company A took over a company B" by the user shown in FIG. 5B-2, the operation of tapping the "Next video" button by the user shown in FIG. 5C-1, or the operation of entering the live image D3 of "A person C analyzes an event that a company A took over a company B" by the user shown in FIG. 5D-2.

In other words, in this embodiment of this application, the terminal device may separately request the media content and the advertising content based on different operations (as shown in FIG. 5B-1 to FIG. 5B-3 and FIG. 5D-1 to FIG. 5D-3), or may request the media content and the advertising content based on a same operation (as shown in FIG. 5C-1 and FIG. 5C-2).

It should be noted that the foregoing trigger condition for sending an advertising request to the advertising server 240 by the terminal device 210 is merely used as an example. In some embodiments, when a preset condition is met, the terminal device 210 may automatically trigger sending of an advertising request to the advertising server 240. For example, when the terminal device displays the interface C1 including the "Next video" button shown in FIG. 5C-1, after the preset time (for example, 3 seconds) after live streaming of "Analysis of A-share market trends" ends, if no operation of the user is detected, the terminal device 210 automatically triggers sending of the advertising request to the advertising server 240, to request the advertising content to be displayed in the "Next video" interface C2 (that is, the first interface, for example, the video interface about "A person C analyzes an event that a company A took over a company B").

In an example, the terminal device 210 integrates with an advertising SDK corresponding to the advertising server 240. The terminal device 210 may invoke the advertising SDK to send an advertising request to the advertising server 240.

In a possible implementation, the terminal device 210 may send an advertising request to the advertising server 240 via an HTTP request. For example, the advertising request sent by the terminal device 210 to the advertising server 240 may be shown in the following Message 7.

### Message 7:

```
         POST https://ad_platform_server/ad/request HTTP/1.1
         Host: ad_platform_server
         Connection: keep-alive
         Content-Length: 114
         {"ad_slot_id": "ad_slot_id_1000", "ad_slot_id_2000"
         "ad_candidates": ["ad_content 1", "ad_content_2"]}.
         In Message 7, "ad_slot_id" is an advertising slot ID;
         and "ad_candidates" is the first advertisement
         candidate set. For example, the "ad_slot_id_1000" may be an ID of the
         advertising slot 1 shown in FIG. 5B-3, FIG.
 5C-2, or FIG. 5D-3, and the "ad_slot_id_2000" may be an ID of the
 advertising slot 2 shown in FIG. 5B-3, FIG.
 5C-2, or FIG. 5D-3. For explanations of other fields, refer to the
 descriptions of Message 1 and Message 2.
 Details are not described herein again.
```

S511: The advertising server 240 determines corresponding advertising content based on the advertising request.

The advertising request carries the advertising slot ID and the first advertisement candidate set.

In an example, the advertising server 240 may select the corresponding advertising content from the advertisement resource based on the advertising content ID in the first advertisement candidate set. In addition, the advertising content that can adapt to the advertising slot size is further selected based on the advertising slot ID.

For example, it is assumed that the advertising request sent by the terminal device 210 to the advertising server 240 is shown in Message 7. The advertising server 240 may determine, based on the advertising request, that the advertising content corresponding to the advertising request includes the advertising content of the financial product A and the advertising content of the financial application B.

In another example, the advertising server 240 may first determine whether the advertising request carries information indicating a user profile (for example, an OAID).

If the advertising request does not carry the information indicating the user profile, the advertising server 240 may select the corresponding advertising content from the advertisement resource based on the advertising content ID in the first advertisement candidate set. In addition, the advertising content that can adapt to the advertising slot size is further selected based on the advertising slot ID.

If the advertising request carries the information indicating the user profile, for example, the OAID, the advertising server 240 may first query the user profile based on the OAID, and then select corresponding advertising content from a corresponding advertisement resource pool based on the user profile. If the advertising server 240 does not find the corresponding user profile based on the OAID, the advertising server 240 may select the corresponding advertising content from the advertisement resource based on the advertising content ID in the first advertisement candidate set.

To support the advertising server 240 in selecting the advertising content based on the OAID and the advertisement candidate set, the advertising server 240 may maintain a first resource pool and a second resource pool. The first resource pool manages an advertisement resource in a dimension of a user profile, and the second resource pool manages an advertisement resource in a dimension of an advertising content ID. For example, the first resource pool is a personalized advertisement resource pool, and the second resource pool is a media content-based resource pool.

S512: The advertising server 240 sends the advertising content to the terminal device 210.

In an example, the advertising server 240 may send the advertising content corresponding to the first advertisement candidate set to the terminal device 210 via an HTTP response message. For example, the HTTP response message that includes the advertising content corresponding to the first advertisement candidate set and that may be sent by the advertising server 240 to the terminal device 210 may be shown in the following Message 8.

### Message 8:

```
         HTTP/1.1 200 OK;
         Content-Type: application/json; charset=utf-8;
         Content-Length: 815;
         {
           "ad_list": [
             {
              "ad_slot_id": "ad_slot_id_1000",
               "ad_type": 1,
               "content": [
                 {
                   "content_id": "ad_content_1",
                   "meta_dta": {
                     "title": ID of the financial product A
          "click_url": "https://ad_platform_server/ad1.html/",
                     "cta": "Learn about the financial product A",
                     "label": "Ad",
                     " info": {
                       "url": "https://ad_platform_server/ad/video1.mp4"
                     }
                   }
                 },
                 {
                   "content_id": "ad_content_2",
                   "meta_dta": {
                      "title": ID of the financial application B
         "click_url": "https://ad_platform_server/ad2.html",
                     "cta": "Download the financial application B",
                     "label": "Ad",
                     " info": {
                       "url": "https://app_shop.com"
                     }
                   }
                 }
               ],
               "ret_code": 200
           ]
         }.
```

In Message 8, "ad_slot_id" is the advertising slot ID; "content" is the advertising content; "content_id" is the advertising content ID; "ad_type" is an advertising form; "meta_dta" is original advertising data; "click_url" is an advertisement URL address; "cta" is an advertising control; "info" is link information in an advertisement; "url" is a URL address of the link information in the advertisement; and "ret_code" is a return value, and 200 indicates that the request is successfully processed. For explanations of other fields, refer to the descriptions of Message 1 and Message 2. Details are not described herein again.

S513: The terminal device 210 displays the advertising content in the first interface.

In an example, the terminal device 210 may invoke the advertising SDK to display the advertising content in the one or more advertising slots in the first interface.

For example, as shown in the interface B3 shown in FIG. 5B-3, the interface C2 shown in FIG. 5C-2, or the interface D3 shown in FIG. 5D-3, the terminal device 210 may display the advertising content of the financial product A in the advertising slot 1 in the first interface, and display the advertising content of the financial application B in the advertising slot 2 in the first interface.

In the foregoing embodiment, the application server 220 sends the first media content to the content analysis server 230, to obtain the context information (that is, the first context information) of the first media content; the application server 220 requests the advertisement candidate set corresponding to the first context information (that is, the first advertisement candidate set) from the advertising server 240; the terminal user opens the first interface on the terminal device, and the terminal device requests the first media content corresponding to the first interface from the application server 220; the application server 220 sends the first media content and the corresponding first advertisement candidate set to the terminal device; and finally, the terminal device requests, from the advertising server 240, the advertising content corresponding to the advertising ID in the first advertisement candidate set. This specific scenario is only used as an example.

Actually, based on the advertisement delivery system provided in this embodiment of this application, the application server 220 may send all media content (for example, second media content created by the creator) to the content analysis server 230, to obtain context information of the media content (for example, the second context information). In addition, the application server 220 may send, to the advertising server 240, all the context information (for example, the second context information) obtained from the content analysis server 230, to obtain an advertising ID (for example, a second advertisement candidate set) of advertising content matching the context information. Based on this, regardless of which interface (for example, the second interface) is opened by the terminal user on the terminal device, the application server 220 may send, to the terminal device, media content corresponding to the interface (for example, the second media content) and the advertisement candidate set corresponding to the media content (for example, the second advertisement candidate set), so that the terminal device includes the advertisement candidate set (for example, the second advertisement candidate set) to request the corresponding advertising content from the advertising server 240, to further display the advertising content on the terminal interface.

It may be understood that, based on the advertisement delivery method provided in this embodiment of this application, the application server may obtain the advertisement candidate set related to the media content from the advertising server, and send the advertisement candidate set related to the media content to the terminal device when the terminal device requests the media content in an APP interface. Further, the terminal device may carry the advertisement candidate set when requesting the advertising content from the advertising server, so that the advertising server can match the advertising content corresponding to the advertisement candidate set. The application server may obtain the context information of the media content from the content analysis server, and send the context information to the advertising server, to obtain the advertisement candidate set related to the context information (that is, the advertisement candidate set related to the media content).

In this solution, because the advertisement candidate set is determined by the advertising server based on the context information of the media content, and the media content corresponds to the APP interface opened by the terminal user, the advertisement candidate set sent by the application server to the terminal device is an identifier of advertising content that has a highest matching degree with that in the APP interface opened by the terminal user in one or more aspects such as a title, a category, or a content abstract. Based on this, when the terminal device includes the advertisement candidate set to request the advertising content from the advertising server, the advertising server may precisely project, to the APP interface on the terminal device, advertising content the same as or similar to that in the APP interface in one or more aspects such as a title, a category, or a content abstract.

According to this solution, advertisement delivery can be implemented more precisely, and context information is analyzed and pre-set on a cloud-side content analysis server, so that the context information of media content can be generated in advance, and accuracy of the context information can be improved. This resolves problems in the conventional technology, such as a large advertisement delivery delay, and a high terminal load that are caused when the terminal device generates the context information, and low advertisement delivery accuracy caused by inaccurate context information.

It should be noted that, in the foregoing embodiments of this application, the architecture of the advertisement delivery system shown in FIG. 2 is merely used as an example. In practical, the advertisement delivery system provided in embodiments of this application may be specifically implemented based on a plurality of functional modules/units in the application server 220 and a plurality of functional modules/units in the advertising server 240.

In an example, FIG. 6 is an interaction diagram of an advertisement delivery process according to an embodiment of this application.

As shown in FIG. 6, the application server 220 may include a content management module 610, a media content analysis module 620, and an advertisement preprocessing module 630.

The media content analysis module 620 is configured to: provide a content upload service for a creator, and provide media content to the content analysis server 230 to obtain context information of the media content.

The advertisement preprocessing module 630 is configured to provide the context information of the media content to the advertising server 240, to obtain an identifier (that is, an advertisement candidate set) of advertising content that is with a same or similar title/category/content abstract and that matches the context information.

The content management module 610 maintains a media content library and an advertisement candidate set. The content management module 610 may be configured to: when receiving a content request from the terminal device 210, select corresponding first media content and a corresponding first advertisement candidate set from the media content library based on a first interface identifier and information about a serving channel of a first interface that are carried in the content request, and send them to the terminal device 210.

Optionally, if the content request from the terminal device 210 includes user account information (for example, an account ID), the content management module 610 may be further configured to: obtain a permission granting request for the first media content; when determining that the first media content is granted permission to a preset user (for example, a VIP member user), perform content obtaining permission verification, to determine whether a user account is an account with preset permission; and when the user account is the account with preset permission, respond to the content request from the terminal device 210.

As shown in FIG. 6, the advertising server 240 may include a candidate set management module 640, a personalized advertisement processing module 650, a non-personalized advertisement processing module 660, and a plurality of advertisement resource pools. As shown in FIG. 6, the plurality of advertisement resource pools in the advertising server 240 are, for example, a personalized advertisement resource pool, a media content-based resource pool (content based-resource pool), and another operation strategy resource pool.

The candidate set management module 640 may be configured to: determine, from an advertisement resource pool (for example, the media content-based resource pool) based on the context information from the application server 220, advertising content with the title/category/content abstract that is the same as or similar to the context information, and send an advertising ID (for example, the advertisement candidate set) to the application server 220.

The personalized advertisement resource pool manages an advertisement resource in a dimension of a user profile. For example, the personalized advertisement resource pool stores advertising content corresponding to a plurality of user profiles. The personalized advertisement processing module 650 is configured to: when an advertising request from the terminal device 210 includes information indicating a user profile, for example, an OAID, query the user profile based on the OAID, select corresponding advertising content from the personalized advertisement resource pool based on the user profile, and send the advertising content to the terminal device 210.

The media content-based resource pool manages an advertisement resource in a dimension of an advertising content ID. The non-personalized advertisement processing module 660 is configured to: when an advertising request from the terminal device 210 does not carry information indicating a user profile, for example, an OAID, but carries the advertisement candidate set, select corresponding advertising content from the media content-based resource pool based on an advertising content ID in the advertisement candidate set, and send the advertising content to the terminal device 210.

In some embodiments, the non-personalized advertisement processing module 660 is further configured to: when failing to obtain the corresponding advertising content from the media content-based resource pool based on the advertising content ID, obtain advertising content from another operation strategy resource pool by adopting a corresponding strategy or rule, and send the advertising content to the terminal device 210. For example, the another operation strategy is, for example, a general delivery strategy, a popularity ranking strategy, a historical related strategy, or an advertising content priority strategy. This is not limited in embodiments of this application.

In some embodiments, the non-personalized advertisement processing module 660 is further configured to: when the personalized advertisement processing module 640 fails to obtain the corresponding advertising content from the personalized advertisement resource pool based on the OAID, select the corresponding advertising content from the media content-based resource pool based on the advertising content ID in the advertisement set candidate carried in the advertising request, and send the advertising content to the terminal device 210.

When the advertisement delivery method in embodiments of this application is performed based on a system architecture shown in FIG. 6, S501 may be cooperatively completed by the media content analysis module 620 and the content analysis server 230 shown in FIG. 6, S502 may be completed by the advertisement preprocessing module 630 shown in FIG. 6, S503 and S504 may be completed by the candidate set management module 640 shown in FIG. 6, S505 may be completed by an APP shown in FIG. 6, S506 may be completed by the content management module 610 shown in FIG. 6, S507 may be completed by an advertising SDK shown in FIG. 6, S508 and S509 may be completed by the personalized advertisement processing module 650 and/or the non-personalized advertisement processing module 660 shown in FIG. 6, and S510 may be cooperatively completed by the advertising SDK and the APP shown in FIG. 6.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the terminal device or the server (the application server 220, the content analysis server 230, and the advertising server 240 shown in FIG. 2) includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal device or the server (the application server 220, the content analysis server 230, and the advertising server 240 shown in FIG. 2) may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In an actual implementation, another division manner may be used.

It should be further understood that the modules in the terminal device and the server (the application server 220, the content analysis server 230, and the advertising server 240 shown in FIG. 2) may be implemented in a form of software and/or hardware. This is not specifically limited herein. In other words, the electronic device is presented in a form of functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described with reference to embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, the storage medium is coupled to the processor, so that the processor can read information from the storage medium and write information to the storage medium. Certainly, the storage medium may be a component of the processor. The processor and the storage medium may be disposed in an ASIC. In addition, the ASIC may be located in an electronic device. Certainly, the processor and the storage medium may alternatively exist as discrete components in a terminal device or a server.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented as a required, that is, an inner structure of an apparatus is divided into different functional modules to implement all or some of the functions described above.

## Claims

1. An advertisement delivery method, wherein the method comprises:
sending a first content request to an application server, wherein the first content request is used to request first media content and a first advertisement candidate set related to the first media content;
receiving the first media content and the first advertisement candidate set from the application server;
displaying a first application interface, wherein the first application interface comprises the first media content;
sending a first advertising request to an advertising server, wherein the first advertising request carries the first advertisement candidate set;
receiving first advertising content from the advertising server, wherein the first advertising content is associated with the first advertisement candidate set; and
displaying a second application interface, wherein the second application interface comprises the first media content and the first advertising content.

2. The method according to claim 1, wherein the method further comprises:
sending a second content request to the application server in response to a first operation, wherein the second content request is used to request second media content and a second advertisement candidate set related to the second media content;
receiving the second media content and the second advertisement candidate set from the application server;
displaying a third application interface, wherein the third application interface comprises the second media content;
sending a second advertising request to the advertising server in response to a second operation, wherein the second advertising request carries an open anonymous device identifier OAID and the second advertisement candidate set;
receiving second advertising content from the advertising server, wherein the second advertising content is associated with the OAID or the second advertisement candidate set; and
displaying a fourth application interface, wherein the fourth application interface comprises the second media content and the second advertising content.

3. The method according to claim 2, wherein the first advertisement candidate set and the second advertisement candidate set are obtained by the application server from the advertising server.

4. The method according to claim 3, wherein
the first advertisement candidate set comprises an advertising identifier of at least one piece of advertising content matching context information of the first media content, and the identifier of the at least one piece of advertising content matching the context information of the first media content comprises an identifier of the first advertising content.

5. The method according to any one of claims 1 to 4, wherein the sending a first content request to an application server comprises:
sending the first content request to the application server in response to a third operation.

6. The method according to claim 5, wherein the third operation is an operation of starting an application, an operation of switching an application interface, or an operation of browsing application content.

7. The method according to any one of claims 1 to 6, wherein the sending a first advertising request to an advertising server comprises:
sending the first advertising request to the advertising server in response to a fourth operation.

8. An advertisement delivery method, wherein the method comprises:
sending, by a terminal device, a first content request to an application server, wherein the first content request is used to request first media content and a first advertisement candidate set related to the first media content;
sending, by the application server, the first media content and the first advertisement candidate set to the terminal device;
displaying, by the terminal device, a first application interface, wherein the first application interface comprises the first media content;
sending, by the terminal device, a first advertising request to an advertising server, wherein the first advertising request carries the first advertisement candidate set;
sending, by the advertising server, first advertising content to the terminal device based on the first advertisement candidate set, wherein the first advertising content is associated with the first advertisement candidate set; and
displaying, by the terminal device, a second application interface, wherein the second application interface comprises the first media content and the first advertising content.

9. The method according to claim 8, wherein the method further comprises:
sending, by the application server, context information of the first media content to the advertising server;
selecting, by the advertising server, at least one piece of advertising content matching the context information of the first media content, wherein the at least one piece of advertising content comprises the first advertising content; and
sending, by the advertising server, the first advertisement candidate set to the application server, wherein the first advertisement candidate set comprises an advertising identifier of the at least one piece of advertising content matching the context information of the first media content.

10. The method according to claim 9, wherein the context information of the first media content comprises one or more of the following information: a title, a category, or a content abstract; and
the selecting, by the advertising server, at least one piece of advertising content matching the context information of the first media content comprises:
selecting, by the advertising server based on one or more of the title, the category, or the content abstract, the at least one piece of advertising content matching the context information of the first media content.

11. The method according to claim 9 or 10, wherein the method further comprises:
obtaining, by the application server, the first media content sent to a content analysis server;
analyzing, by the content analysis server, the first media content, and generating the context information of the first media content; and
receiving, by the application server, the context information of the first media content from the content analysis server; or
analyzing, by the application server, the first media content, and generating the context information of the first media content.

12. The method according to any one of claims 8 to 11, wherein the method further comprises:
receiving, by the application server, the first media content uploaded by a creator; or
obtaining, by the application server, the first media content from a cooperation platform.

13. The method according to any one of claims 8 to 12, wherein the method further comprises:
sending, by the terminal device, a second content request to the application server in response to a first operation, wherein the second content request is used to request second media content and a second advertisement candidate set related to the second media content;
sending, by the application server, the second media content and the second advertisement candidate set to the terminal device;
displaying, by the terminal device, a third application interface, wherein the third application interface comprises the second media content;
sending, by the terminal device, a second advertising request to the advertising server in response to a second operation, wherein the second advertising request carries an OAID and the second advertisement candidate set;
sending, by the advertising server, second advertising content to the terminal device, wherein the second advertising content is associated with the OAID or the second advertisement candidate set; and
displaying, by the terminal device, a fourth application interface, wherein the fourth application interface comprises the second media content and the second advertising content.

14. The method according to any one of claims 8 to 13, wherein the sending, by the advertising server, second advertising content to the terminal device comprises:
determining, by the advertising server, a user profile based on the OAID; and
selecting, by the advertising server, the second advertising content based on the user profile, and sending the second advertising content to the terminal device.

15. The method according to claim 14, wherein when the advertising server fails to select the corresponding advertising content based on the user profile, the method further comprises:
selecting, by the advertising server, the second advertising content based on the second advertisement candidate set.

16. The method according to any one of claims 8 to 15, wherein the sending, by a terminal device, a first content request to an application server comprises:
sending, by the terminal device, the first content request to the application server in response to a third operation.

17. The method according to claim 16, wherein the third operation is an operation of starting an application, an operation of switching an application interface, or an operation of browsing application content.

18. A terminal device, wherein the terminal device comprises:
a communication interface, configured to communicate with another node;
a memory, configured to store computer program instructions; and
a processor, configured to execute the computer program instructions, to support the terminal device in implementing the method according to any one of claims 1 to 7.

19. A computer-readable storage medium, wherein the computer-readable storage medium stores computer program instructions, and when the computer program instructions are executed by a processing circuit, the method according to any one of claims 1 to 7 is implemented.

20. A computer program product comprising instructions, wherein when the computer program product runs on a computer, the computer is enabled to perform the method according to any one of claims 1 to 7.

21. A chip system, wherein the chip system comprises a processing circuit and a storage medium, the storage medium stores computer program instructions, and when the computer program instructions are executed by the processing circuit, the method according to any one of claims 1 to 7 is implemented.
